(19) Europäisches Patentamt
European Patent Office
Office européen des brevets

(11) **EP 3 385 072 B2**

(12) **NEW EUROPEAN PATENT SPECIFICATION**
After opposition procedure

(45) Date of publication and mention
of the opposition decision:
**29.07.2026   Bulletin 2026/31**

(45) Mention of the grant of the patent:
**06.09.2023   Bulletin 2023/36**

(21) Application number: **16870704.0**

(22) Date of filing: **30.11.2016**

(51) International Patent Classification (IPC):
**B32B 27/30** (2006.01)         **B05D 5/00** (2006.01)
**B05D 7/24** (2006.01)         **B63B 59/04** (2006.01)
**C09D 5/16** (2006.01)         **C09D 143/04** (2006.01)
**C09D 163/00** (2006.01)

(52) Cooperative Patent Classification (CPC):
**B05D 5/00; C09D 5/1668; B05D 7/24; B32B 27/30;
B63B 59/04; C09D 143/04; C09D 163/00**

(86) International application number:
**PCT/JP2016/085530**

(87) International publication number:
**WO 2017/094767 (08.06.2017 Gazette 2017/23)**

(54) **ANTIFOULING COMPOSITE COATING FILM, ANTIFOULING SUBSTRATE, AND METHOD FOR MANUFACTURING ANTIFOULING SUBSTRATE**

FÄULNISVERHINDERNDE ZUSAMMENGESETZTE BESCHICHTUNG, FÄULNISVERHINDERNDES SUBSTRAT UND VERFAHREN ZUR HERSTELLUNG DES FÄULNISVERHINDERNDEN SUBSTRATS

FILM DE REVÊTEMENT COMPOSITE ANTISALISSURE, SUBSTRAT ANTISALISSURE, ET PROCÉDÉ POUR FABRIQUER UN SUBSTRAT ANTISALISSURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **30.11.2015   JP 2015233404**

(43) Date of publication of application:
**10.10.2018   Bulletin 2018/41**

(73) Proprietor: **Chugoku Marine Paints, Ltd.**
**Hiroshima 739-0652 (JP)**

(72) Inventors:
• **TANAKA, Hideyuki**
**Otake-shi**
**Hiroshima 739-0652 (JP)**
• **NIIMOTO, Jyunji**
**Otake-shi**
**Hiroshima 739-0652 (JP)**

(74) Representative: **Hoffmann Eitle**
**Patent- und Rechtsanwälte PartmbB**
**Arabellastraße 30**
**81925 München (DE)**

(56) References cited:
| | |
|---|---|
| EP-A1- 3 222 682 | EP-A1- 3 330 331 |
| WO-A1-2013/073580 | WO-A1-2014/175140 |
| WO-A1-2014/175140 | WO-A1-2014/175246 |
| JP-A- 2000 037 658 | JP-A- 2002 053 796 |
| JP-A- 2002 053 797 | JP-A- 2005 082 725 |
| JP-A- 2010 084 099 | JP-A- H10 211 464 |
| JP-A- H10 211 464 | US-A1- 2016 068 688 |

Remarks:
The file contains technical information submitted after the application was filed and not included in this specification

# EP 3 385 072 B2

**Description**

TECHNICAL FIELD

The present invention relates to an antifouling composite coating film in which an antifouling coating film formed from an antifouling coating composition is disposed on an epoxy resin-based coating film, to an antifouling substrate having the antifouling composite coating film, and to a method for producing such antifouling substrate.

BACKGROUND ART

The surface of substrates that are submerged in water for a long period of time, such as ships and underwater structures, is prone to be fouled by various aquatic organisms including animals such as oysters, mussels and barnacles, plants such as seaweeds, and bacteria. The propagation of these aquatic organisms on the substrate surface leads to various problems. In the case of a substrate that is, for example, a ship, the surface roughness from the draft line to the bottom of the ship is increased to give rise to a decrease in ship speed and an increase in fuel consumption. In the case where the substrate is seawater inlet and outlet pipes in facilities such as thermal power plants and nuclear power plants, the circulation system can be hampered by clogging of pipes through which seawater (cooling water) is supplied and discharged, or by a decrease in flow speed.

To address such problems, research and development are underway of antifouling paints (antifouling coating compositions) that are applied to various substrates to prevent the substrates from the attachment of aquatic organisms.

Such substrates as ships and underwater structures are most often made of metal materials such as steel, and are therefore coated with epoxy resin-based anticorrosive paints to prevent corrosion by seawater. Further, such coating films are overcoated with antifouling paints to prevent the attachment of aquatic organisms. Because an antifouling paint does not adhere well to an epoxy resin-based anticorrosive coating film, a vinyl resin-based binder is applied first and the antifouling paint is applied thereon.

Antifouling coating compositions which contain a hydrolyzable resin as a resin component (a binder component) are generally known. Typical examples of such compositions that have been developed are antifouling coating compositions that include a hydrolyzable resin containing a triorganosilyl group or a metal such as zinc. Coating compositions of this type are applied to parts such as bottoms of ships for the purpose of preventing the attachment of aquatic organisms. Patent Literatures 1 to 5 discussed below disclose antifouling coating compositions containing a hydrolyzable resin and techniques associated with overcoating of epoxy resin-based anticorrosive coating films with such compositions.

Patent Literature 1 discloses a ship painting method in which the entirety of outside shell of a ship is coated with a single kind of a tar-free epoxy resin heavy-duty anticorrosive paint as a primer, and an organotin-free hydrolyzable antifouling paint is applied to the primer coating film in (a) a ship bottom portion or in (a) a ship bottom portion and (b) a waterline portion.

Patent Literature 2 discloses an antifouling coating composition that contains a polymer with a number average molecular weight of 1000 to 20,000 obtained by polymerizing a polymerizable unsaturated carboxylic acid triorganosilyl, and a zinc salt of a rosin or a zinc salt of a rosin derivative.

Patent Literature 3 discloses an antifouling coating composition which contains a hydrolyzable resin that is a copolymer obtained from a triorganosilyl methacrylate ester monomer (a) and a methoxyalkyl methacrylate ester monomer (b) wherein the content of (a) + (b) is not less than 80 wt%, and a rosin copper salt.

Patent Literature 4 pertains to an antifouling coating composition that contains a copolymer of triisopropylsilyl acrylate and triisopropylsilyl methacrylate, and describes Examples which evaluate the adhesion with respect to epoxy binder coating films.

Patent Literature 5 discloses an antifouling coating composition that contains a hydrolyzable resin including a silyl ester copolymer, copper and/or an inorganic copper compound, and zinc oxide.

WO 2014/175140 A1 discloses an antifouling composite coating film comprising: an epoxy layer; and a layer comprising: a hydrolyzable copolymer of triisopropyl methacrylate, 2-methoxyethyl (meth)acrylate, and additional acrylate monomers; and rosin.

CITATION LIST

PATENT LITERATURE

Patent Literature 1: JP-A-H11-333374
Patent Literature 2: JP-A-2011-26357

Patent Literature 3: JP-A-2010-144106
Patent Literature 4: WO 2013/073580
Patent Literature 5: WO 2009/031509

## SUMMARY OF INVENTION

## TECHNICAL PROBLEM

In Patent Literature 1, a tar-free epoxy resin heavy-duty anticorrosive paint is applied to a waterline portion and a bottom portion of outside shell of a ship to form a primer layer, a tin-free hydrolyzable antifouling paint is applied onto the primer layer after an interval of 10 days, and the adhesion after 180 days of immersion at ordinary temperature is examined. To ensure adhesion, this antifouling paint contains a tributylsilyl acrylate resin in combination with an acrylic styrene-based resin and a chlorinated paraffin as a plasticizer. This chemical composition leads to low coating film consumption properties and may allow fouling to occur during long periods of immersion.

In Patent Literature 2, tests are conducted with respect to compositions including a copolymer of triisopropylsilyl methacrylate and 2-methoxyethyl (meth)acrylate, and a rosin zinc salt. The test plates are fabricated by applying such a composition onto a one-component vinyl-based A/C in order to ensure adhesion when submerged in seawater.

In Patent Literature 3, the antifouling paints are exclusively applied onto coating films of vinyl-based anticorrosive paints, and no adhesion tests are carried out.

Because rosin metal salts are essential components in Patent Literatures 2 and 3, the coating films are hard and have a high cohesive force inside the coating films, and therefore will not exhibit sufficient adhesion on epoxy resin-based anticorrosive coating films that are cured by reaction.

In Patent Literature 4, an epoxy anticorrosive coating film is coated with an antifouling paint after 1 day of drying indoors, and is subjected to artificial seawater under accelerated conditions of 50°C for 5 months, the adhesion data being described. In this literature, triisopropylsilyl acrylate is used together. When, in particular, the antifouling paint is applied onto an epoxy anticorrosive coating film at a long interval, the triisopropylsilyl acrylate is hydrolyzed at a high rate in seawater and the coating film increases its hardness rapidly with time and will peel. This fact requires that coating applications take place at a short interval.

Patent Literature 5 describes that an epoxy coating film is dried for 1 day and overcoated with an antifouling paint, and static antifouling properties are tested. In this test, the adhesion with respect to the epoxy coating film is enhanced not by combination with a rosin or a monocarboxylic acid but by the use of a chlorinated paraffin or a terpene-based plasticizer together. Further, the interval between the coating application of the epoxy paint and that of the antifouling paint is as short as 1 day, and is not practical and is hardly applicable to actual shipbuilding processes. Furthermore, Patent Literature 5 describes only the testing of static antifouling properties, and is silent with respect to adhesion tests such as knife cut test.

As discussed above, when an epoxy anticorrosive coating film for the protection of a steel substrate from seawater corrosion is to be overcoated with a hydrolyzable antifouling paint, a conventional approach to ensuring adhesion is generally to apply a one-component vinyl-based binder coating before the hydrolyzable antifouling paint.

However, the vinyl resin that constitutes such a one-component vinyl-based binder coating is of high molecular weight and is difficult to form a paint unless dissolved in a large amount of an organic solvent. Consequently, the paint generates large amounts of VOC (volatile organic compounds) and causes air pollution problems. Further, the application of a vinyl resin-based binder coating onto an epoxy coating film disadvantageously adds a step. Furthermore, vinyl resin-based binder coatings are poor in resistance to damages such as by impact as compared to epoxy resins, and thus suffer problems where a cohesive failure occurs inside the vinyl resin-based binder coating film as a result of collision with floats during ship navigation or the like, or due to collision during berthing of a ship, resulting in peeling.

When the coating application of an epoxy anticorrosive coating film and that of a hydrolyzable antifouling paint thereon take place at a short interval (for example, 1 day), a certain level of adhesion has been successfully ensured even in the absence of a vinyl resin-based binder coating. For shipbuilding process reasons, however, an interval of several days is virtually necessary between the coating application of an epoxy anticorrosive paint and that of an antifouling paint. Thus, there has been a demand that the coating applications can be made at an extended interval of time. Further, in recent ship repairing, the period between each repair has become long, and consequently there has been also a demand that good adhesion be maintained over an extended period of time.

From the foregoing, objects of the present invention are to provide an antifouling composite coating film having excellent long-term antifouling properties, long-term water resistance, damage resistance and long-term adhesion, and to provide an antifouling substrate having the composite coating film. Another object is to provide a method for producing such antifouling substrates.

SOLUTION TO PROBLEM

In light of the circumstances described above, the present inventors have found that a hydrolyzable antifouling paint including a rosin and/or a monocarboxylic acid compound, in combination with a specific silylmethacrylic resin can maintain good antifouling performance and can adhere stably to an epoxy resin-based coating film over a long period.

Specifically, the present invention pertains to the subject-matter as defined in the appended claims.

ADVANTAGEOUS EFFECTS OF INVENTION

The antifouling composite coating films of the present invention not only have long-term antifouling properties and long-term water resistance, but also exhibit, over a long term, excellent damage resistance and adhesion, appropriate flexibility, and crack resistance. Further, the antifouling composite coating films can be produced while extending (easing the limitation on) the interval between coating applications. Furthermore, the antifouling composite coating film does not involve a vinyl-based binder intermediate coat and thus allows the coating process to be expedited. Further, the antifouling substrate production method of the present invention can realize excellent damage resistance and long-term adhesion, and thus can produce antifouling substrates that exhibit, over a long term, antifouling properties, water resistance, appropriate flexibility, and crack resistance.

BRIEF DESCRIPTION OF DRAWING

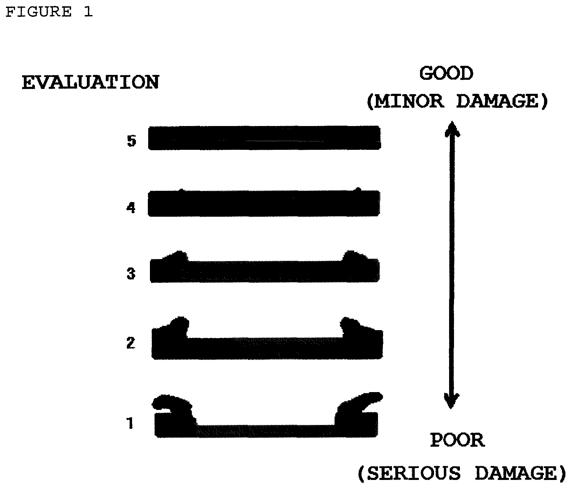

[Fig. 1] Fig. 1 is a view illustrating criteria on which the damage resistance of layered coating films is evaluated.

DESCRIPTION OF EMBODIMENTS

Hereinbelow, antifouling composite coating films, antifouling substrates, and antifouling substrate production methods according to the present invention will be described in detail. First, there will be described a hydrolyzable antifouling coating composition that is used for the production of the antifouling composite coating films.

(Hydrolyzable antifouling coating composition (q))

A hydrolyzable antifouling coating composition (antifouling paint) (q) includes (A) a specific hydrolyzable copolymer and (B) a rosin and/or a monocarboxylic acid compound. The antifouling paint (q) may include optional components in accordance with purpose.

((A) Hydrolyzable copolymers)

The hydrolyzable copolymer (A) includes a structural unit (1) derived from triisopropylsilyl methacrylate (i), a structural unit (2) derived from 2-methoxyethyl methacrylate (ii), wherein the 2-methoxyethyl (meth)acrylate (ii) comprises 2-methoxyethyl methacrylate, and a structural unit (3) derived from a polymerizable monomer (iii) having a polymerizable double bond with the proviso that triisopropylsilyl methacrylate and 2-methoxyethyl (meth)acrylate are excluded.

By virtue of the hydrolyzable copolymer (A) containing the structural units (1), the hydrolyzable antifouling coating composition (q) that includes the hydrolyzable copolymer (A) attains excellent stability as an antifouling coating film in contact with seawater or freshwater. Because of the hydrolyzable copolymer (A) containing the structural units (1) and (2), the antifouling coating composition, when applied onto an epoxy resin-based coating film, attains excellent long-term antifouling properties, long-term water resistance, damage resistance and long-term adhesion. Further, this antifouling coating composition can form an antifouling coating film which strongly adheres to an epoxy resin-based coating film not only when the antifouling coating is applied shortly after the formation of the epoxy resin-based coating film, but also when the interval between the coating applications is long. During a long interval between the coating applications, the curing of the epoxy resin-based coating film reaches an advanced stage and the hardness is increased. However, an antifouling coating film obtained from the hydrolyzable copolymer (A) that combines the structural units (1) and (2) can strongly adhere to such an epoxy resin-based coating film that has been cured to an advanced stage and has become hard, probably because the antifouling coating film has favorable hardness. As a result, the use of the hydrolyzable copolymer (A) having the specific structural units does away with the need of a vinyl resin-based binder coating.

The hydrolyzable copolymer (A) preferably satisfies the following conditions 1 and 2.

Condition 1: The proportion of the structural units (1) is 30 to 70 mass%, and is desirably 40 to 65 mass% from the point of view of the enhancement of properties such as coating film hydrolyzability (consumption properties) and static antifouling properties.

Condition 2: The proportion of the structural units (2) is 5 to 40 mass%, and is desirably 10 to 30 mass% from the point of view of the enhancement of properties such as coating film hydrolyzability (consumption properties) and static antifouling properties.

From the point of view of the enhancement of properties such as coating workability, long-term storage stability, coating film water resistance (mechanical characteristics), coating film hydrolyzability (consumption properties), static antifouling properties and coating film appearance, it is desirable that the hydrolyzable copolymer (A) be usually present in an amount of 10 to 50 mass%, and preferably 15 to 30 mass% of the antifouling coating composition (q) . To attain enhancements in various performances of the antifouling paint such as coating workability, long-term storage stability, coating film water resistance (mechanical characteristics), coating film hydrolyzability (consumption properties), static antifouling properties and coating film appearance, it is desirable that the hydrolyzable copolymer (A) usually represent about 5 to 50 mass%, and preferably about 10 to 30 mass% of the content of solids (thermal residues, nonvolatile components) of the antifouling coating composition (q) taken as 100 mass%. Here, the solids (thermal residues) present in the antifouling coating composition are residues obtained by holding 1.5 g of the antifouling coating composition in a thermostatic chamber at 125°C for 1 hour to remove volatile components.

The polymerizable monomer (iii) having a polymerizable double bond is any of monomers other than triisopropylsilyl methacrylate (i) and 2-methoxyethyl (meth)acrylate. This monomer has a polymerizable double bond (for example, a vinyl group or a (meth)acryloyl group) and is copolymerized with the monomer (i) (namely, triisopropylsilyl methacrylate (i)) or the monomer (ii) (namely, 2-methoxyethyl (meth)acrylate (ii) which comprises 2-methoxyethyl methacrylate).

The polymerizable monomer (iii) is preferably an ester having a polymerizable double bond or a carboxylic acid having a polymerizable double bond. Such a compound used as the polymerizable monomer (iii) has good compatibility with triisopropylsilyl methacrylate (i) and 2-methoxyethyl methacrylate (ii) and shows similar reactivities with respect to triisopropylsilyl methacrylate (i) and to 2-methoxyethyl methacrylate (ii), with the result that the structural units derived from the respective monomers are evenly (randomly) incorporated and the resultant hydrolyzable copolymer (A) attains good compatibility with solvents. If the monomers have markedly different polymerization reactivities from one another and are difficult to be copolymerized, the polymer that is obtained is a homopolymer or a copolymer of nonuniform component units. By using the compound described above as the polymerizable monomer (iii), such problems can be reduced and the hydrolyzable copolymer (A) can be produced stably.

Examples of the esters and the carboxylic acids used as the polymerizable monomers (iii) include (meth)acrylate esters except triisopropylsilyl methacrylate and 2-methoxyethyl (meth)acrylate, monocarboxylic acids having a polymerizable double bond, dicarboxylic acids having a polymerizable double bond or half esters (monoesters) and diesters thereof, vinyl esters, metal ester group-containing (meth)acrylates, and organosiloxane group-containing (meth)acrylates. Examples of the polymerizable monomers (iii) other than esters and carboxylic acids include styrenes.

Specific examples of the polymerizable monomers (iii) include (meth)acrylate esters such as methyl (meth)acrylate ester, ethyl (meth) acrylate ester, butyl (meth) acrylate ester, 2-ethylhexyl (meth)acrylate ester, lauryl (meth)acrylate ester, tridecyl (meth)acrylate ester, stearyl (meth)acrylate ester, allyl (meth)acrylate ester, cyclohexyl (meth)acrylate ester, benzyl (meth)acrylate ester, isobornyl (meth)acrylate ester, ethoxy (meth)acrylate ester, glycidyl (meth)acrylate ester, tetrahydrofurfuryl (meth)acrylate ester, hydroxyethyl (meth)acrylate ester, hydroxypropyl (meth)acrylate ester and hydroxybutyl (meth)acrylate ester;

   monocarboxylic acids such as (meth)acrylic acid;
   dicarboxylic acids such as itaconic acid, maleic acid and succinic acid, and half esters (monoesters) and diesters thereof;
   styrenes such as styrene and $\alpha$-methylstyrene; and
   vinyl esters such as vinyl acetate and vinyl propionate. These may be used singly, or two or more may be used in combination.

The weight average molecular weight of the hydrolyzable copolymer (A) is preferably 5,000 to 100,000, and more preferably 10,000 to 60,000. When the weight average molecular weight is in this range, the antifouling coating composition including such a hydrolyzable copolymer (A) can form a coating film that exhibits good hydrolyzability to attain further enhanced static antifouling properties, and has still improved long-term mechanical characteristics (for example, adhesion of the antifouling coating film of the invention with respect to surfaces such as substrates and undercoating films, and appearance characteristics such as cracks, during prolonged immersion in water).

The above weight average molecular weight is a value measured by gel permeation chromatography (GPC) using a standard polystyrene calibration curve. The GPC conditions for the measurement of molecular weight are as follows.

(GPC conditions)

Pump: "HLC-8120GPC" (manufactured by TOSOH CORPORATION)
Columns: "SuperH2000 + H4000" (manufactured by TOSOH CORPORATION, 6 mm (inner diameter), each 15 cm (length))
Eluent: tetrahydrofuran (THF)

Other conditions

Flow rate: 0.500 ml/min
Detector: RI
Column oven temperature: 40°C
Standard substance: polystyrene
Sample preparation: A solution of the hydrolyzable copolymer (A) is dehydrated by the addition of a small amount of calcium chloride and is filtered through a membrane filter. The residue thus obtained is used as a GPC measurement sample.

In the hydrolyzable copolymer (A), the ratio of the mass of the structural units (1) to the total mass of the structural units (1), (2) and (3) ((1) + (2) + (3)), that is, the ratio (mass ratio (I)) ((1)/[(1) + (2) + (3)]) is, for example, 30/100 to 70/100, preferably 40/100 to 65/100, and more preferably 45/100 to 65/100.

When the value of the mass ratio (I) is in the above range, the antifouling coating composition that is obtained can attain good coating film hydrolyzability (consumption properties), static antifouling properties and coating film water resistance (mechanical characteristics).

The ratio of the mass of the structural units (2) to the total mass of the structural units (1), (2) and (3) ((1) + (2) + (3)), that is, the ratio (mass ratio (II)) ((2)/[(1) + (2) + (3)]) is 10/100 to 30/100.

When the value of the mass ratio (II) is in the above range, antifouling coating films formed from the antifouling coating composition can attain sufficient coating film consumption properties (renewability) when immersed in water, in particular, seawater, thus exhibiting good long-term antifouling properties such as static antifouling properties, and are hardly cracked over a long period of time and can attain excellent adhesion.

The ratio of the mass of the structural units (3) to the total mass of the structural units (1), (2) and (3) ((1) + (2) + (3)), that is, the ratio (mass ratio (III)) ((3)/[(1) + (2) + (3)]) is, for example, 3/100 to 65/100, preferably 5/100 to 50/100, and particularly preferably 7/100 to 40/100.

The hydrolyzable copolymer (A) is prepared by copolymerizing triisopropylsilyl methacrylate (i), 2-methoxyethyl (meth)acrylate (ii) and the polymerizable monomer (iii) having a polymerizable double bond, the 2-methoxyethyl (meth) acrylate (ii) comprising 2-methoxyethyl methacrylate, by a known polymerization method. Examples of the polymerization methods include radical or ion polymerization in solution polymerization, bulk polymerization, semi-batch polymerization, suspension polymerization, coordination polymerization, living polymerization or emulsion polymerization.

In view of the fact that the hydrolyzable copolymer (A) can be produced with enhanced productivity and production workability and the copolymer (A) that is obtained has a low viscosity, it is preferable that the monomers (1) to (3) be polymerized by solution polymerization using a common organic solvent such as toluene, xylene, methyl isobutyl ketone or n-butyl acetate. Because the copolymer (A) obtained in this case has a low viscosity, the amount of a solvent that is added to reduce the viscosity of the antifouling coating composition can be decreased and consequently the VOC content can be reduced. Further, the reduction in the viscosity of the antifouling coating composition leads to enhancements in properties such as the coating workability of the coating composition, and the appearance (leveling properties) of antifouling coating films.

A wide range of known radical polymerization catalysts may be used. Examples include azo compounds such as 2,2'-azobis(2-methylbutyronitrile) (AMBN), 2,2'-azobis(2,4-dimethylvaleronitrile) and 2,2'-azobis-isobutyronitrile, and peroxides such as benzoyl peroxide, t-butyl peroxy-2-ethylhexanoate, t-butyl peroxybenzoate and t-butyl peroxyoctoate, described in literature such as JP-A-2001-151830, paragraph [0099].

The proportions of the amounts (masses) in which the monomers (1) to (3) are fed to the polymerization reaction tend to agree with the proportions of the contents (masses) of the structural units (1) to (3) present in the resultant copolymer. Thus, the conditions 1 and 2, and the mass ratios (I) to (III) described hereinabove may be controlled to desired values based on the amounts (masses) and mass ratio in which the monomers are fed to the polymerization reaction.

⟨(B) Rosins and/or monocarboxylic acid compounds⟩

The hydrolyzable antifouling coating composition (q) essentially contains a rosin and/or a monocarboxylic acid compound (B) to promote the dissolution of the antifouling agent from an antifouling coating film formed from the composition and to enhance, in particular, static antifouling properties. In the present invention, the hydrolyzable copolymer (A) having the structural units (1) and (2) is combined with the rosin and/or the monocarboxylic acid compound (B), and consequently the hydrolyzable antifouling coating composition (q), when applied onto an epoxy resin-based coating film, can constitute an antifouling composite coating film that exhibits excellent long-term antifouling properties such as static antifouling properties, and outstanding long-term water resistance, long-term adhesion and damage resistance. The reason for the enhancements in the above long-term characteristics and damage resistance is probably because the combination of the hydrolyzable copolymer (A) with the rosin and/or the monocarboxylic acid compound (B) restrains the increase in the hardness of an antifouling coating film obtained from the antifouling coating composition.

The rosin is a rosin or a rosin derivative, the rosin being selected from gum rosin, wood rosin and tall oil rosin, and the rosin derivative being selected from hydrogenated rosin and disproportionated rosin. The monocarboxylic acid compound is selected from trimethylisobutenylcyclohexenecarboxylic acid, naphthenic acid, versatic acid, stearic acid, salicylic acid, and salts of these acids. These may be used singly, or two or more may be used in combination. A monocarboxylic acid that is liquid has an effect of enhancing adhesion by relaxing the cohesive force of an antifouling coating film that contains such a monocarboxylic acid when the coating film is immersed in water, in particular, at an initial stage of immersion. In the antifouling coating composition (q), the mass ratio (WA/WB) of the mass (WA) of the hydrolyzable copolymer (A) to the mass (WB) of the rosin and/or the monocarboxylic acid compound is preferably 99.9/0.1 to 30/70, more preferably 95/5 to 35/65, and still more preferably 90/10 to 40/60.

The hydrolyzable antifouling coating composition (q) may further contain at least one kind of an additive selected from the group consisting of cuprous oxide (C), inorganic copper compounds (D), organic antifouling agents (E), color pigments (F), extender pigments (G), pigment dispersants (H), plasticizers (I), anti-sagging agents (J), anti-settling agents (K), dehydrating agents (L) and solvents (M). These additives will be described in detail below.

⟨(C) Cuprous oxide⟩

The hydrolyzable antifouling coating composition (q) may further contain cuprous oxide (C).

To attain enhancements in the long-term antifouling properties and adhesion of antifouling coating films, the content of the cuprous oxide (C) is preferably 10 to 800 parts by mass, and more preferably 100 to 750 parts by mass with respect to 100 parts by mass of the hydrolyzable copolymer (A) .

To allow long-term antifouling properties to be exhibited, the average particle size of the cuprous oxide (C) is preferably about 3 to 30 $\mu$m.

From the point of view of long-term stability during storage, the surface of the cuprous oxide (C) is preferably treated with an agent such as glycerin, stearic acid, lauric acid, sucrose, lecithin or mineral oil.

Examples of commercial cuprous oxide products include NC-301 (manufactured by NISSIN CHEMCO LTD.), NORDOX (manufactured by NORDOX AS), NC-803 (manufactured by NISSIN CHEMCO LTD.), Red Copp 97N Premium (manufactured by AMERICAN CHEMET Co.), Purple Copp (manufactured by AMERICAN CHEMET Co.), and LoLo Tint 97 (manufactured by AMERICAN CHEMET Co.).

⟨(D) Inorganic copper compounds⟩

To ensure that antifouling coating films formed from the antifouling coating composition will attain still enhanced antifouling properties, the hydrolyzable antifouling coating composition (q) may further contain an inorganic copper compound (D) except cuprous oxide (C). Examples of the inorganic copper compounds (D) include copper thiocyanate and cupronickel. The inorganic copper compounds (D) may be used singly, or two or more may be used in combination.

To attain an enhancement in the long-term antifouling properties of antifouling coating films, the content of the inorganic copper compound (D) in the hydrolyzable antifouling coating composition (q) is preferably 0 to 800 parts by mass, and more preferably 0 to 600 parts by mass with respect to 100 parts by mass of the hydrolyzable copolymer (A), and is preferably 0 to 200 parts by mass, and more preferably 0 to 100 parts by mass with respect to 100 parts by mass of the cuprous oxide (C).

((E) Organic antifouling agents)

To ensure that antifouling coating films formed from the antifouling coating composition will attain still enhanced antifouling properties, in particular, enhanced protection against fouling by aquatic plant organisms, the hydrolyzable antifouling coating composition (q) may further contain an organic antifouling agent (E).

Examples of the organic antifouling agents (E) include metal pyrithiones such as copper and zinc pyrithiones, 4,5-dichloro-2-n-octyl-4-isothiazolin-3-one, 4-bromo-2-(4-chlorophenyl)-5-(trifluoromethyl)-1H-pyrrole-3-carbonitrile, pyridinetriphenylborane, 4-isopropylpyridinediphenylmethylborane, N,N-dimethyl-N'-(3,4-dichlorophenyl)urea, N-(2,4,6-trichlorophenyl)maleimide, 2,4,5,6-tetrachloroisophthalonitrile, 2-methylthio-4-tert-butylamino-6-cyclopropylamino-1,3,5-tr iazine, medetomidine, bisdimethyldithiocarbamoylzinc ethylenebisdithiocarbamate, chloromethyl-n-octyl disulfide, N' ,N'-dimethyl-N-phenyl-(N-fluorodichloromethylthio)sulfam ide, tetraalkylthiuram disulfide, zinc dimethyldithiocarbamate, zinc ethylenebisdithiocarbamate, 2,3-dichloro-N-(2',6'-diethylphenyl)maleimide and 2,3-dichloro-N-(2'-ethyl-6'-methylphenyl)maleimide. The organic antifouling agents (E) may be used singly, or two or more may be used in combination.

To ensure that antifouling coating films formed from the antifouling coating composition will attain enhancements in long-term antifouling properties and in the retention of coating film water resistance (the retention of mechanical characteristics), the content of the organic antifouling agent (E) in the hydrolyzable antifouling coating composition (q) is preferably 0.1 to 500 parts by mass, and more preferably 0.5 to 300 parts by mass with respect to 100 parts by mass of the hydrolyzable copolymer (A). The content of the organic antifouling agent (E) is usually about 0.1 to 30 mass%, and preferably about 0.1 to 20 mass% of the hydrolyzable antifouling coating composition (q) (including a solvent) taken as 100 mass%.

((F) Color pigments)

To control the color tone of antifouling coating films formed from the antifouling coating composition or to impart a desired color tone to the coating films, the hydrolyzable antifouling coating composition (q) may contain a color pigment (F) .

Examples of the color pigments (F) include various known organic and inorganic color pigments. Examples of the organic color pigments include carbon black, naphthol red and phthalocyanine blue. Examples of the inorganic color pigments include red iron oxide, barite powder, titanium white and yellow iron oxide. The color pigments (F) may be used singly, or two or more may be used in combination.

The hydrolyzable antifouling coating composition (q) may include colorants except the color pigments (F), such as dyes, together with the color pigments (F) or instead of the color pigments (F).

To attain enhancements in color properties, hiding properties, exposure discoloration resistance, antifouling properties and coating film water resistance (mechanical characteristics) of antifouling coating films formed from the antifouling coating composition, the content of the color pigment (F) in the hydrolyzable antifouling coating composition (q) is preferably 0.01 to 100 parts by mass, and more preferably 0.01 to 50 parts by mass with respect to 100 parts by mass of the hydrolyzable copolymer (A).

The content of the color pigment (F) is usually about 0.1 to 30 mass%, and preferably about 0.1 to 20 mass% of the hydrolyzable antifouling coating composition (q) (including a solvent) taken as 100 mass%.

((G) Extender pigments)

The extender pigments (G) provide enhancements in coating properties such as crack resistance of antifouling coating films formed from the antifouling coating composition.

Examples of the extender pigments (G) include talc, silica, mica, clay, potassium feldspar, zinc oxide, calcium carbonate, kaolin, alumina white, white carbon, aluminum hydroxide, magnesium carbonate, barium carbonate and barium sulfate. Of these, talc, silica, mica, clay, calcium carbonate, kaolin, barium sulfate, potassium feldspar and zinc oxide are preferable. Calcium carbonate and white carbon are also used as an anti-settling agent (K) described later and a matting agent, respectively. The extender pigments (G) may be used singly, or two or more may be used in combination.

To attain enhancements in coating film water resistance (mechanical characteristics), antifouling properties and coating film hydrolyzability (consumption properties) of antifouling coating films formed from the antifouling coating composition, the content of the extender pigment (G) in the hydrolyzable antifouling coating composition (q) is preferably 0.1 to 500 parts by mass, and more preferably 10 to 300 parts by mass with respect to 100 parts by mass of the hydrolyzable copolymer (A).

The content of the extender pigment (G) is usually about 0.1 to 50 mass%, and preferably about 0.1 to 40 mass% of the hydrolyzable antifouling coating composition (q) (including a solvent) taken as 100 mass%.

((H) Pigment dispersants)

Examples of the pigment dispersants (H) include known various organic and inorganic pigment dispersants such as aliphatic amines and organic acids (for example, "Duomeen TDO" (manufactured by Lion Corporation) and "Disperbyk 101" (manufactured by BYK Japan K.K.)). The pigment dispersants (H) may be used singly, or two or more may be used in combination.

To attain enhancements in the effect of reducing the paint viscosity of the antifouling coating composition and the effect of preventing flooding in antifouling coating films, the content of the pigment dispersant (H) in the hydrolyzable antifouling coating composition (q) is preferably 0.01 to 100 parts by mass, and more preferably 0.01 to 50 parts by mass with respect to 100 parts by mass of the hydrolyzable copolymer (A) .

The content of the pigment dispersant (H) is usually about 0.1 to 10 mass%, and preferably about 0.1 to 5 mass% of the hydrolyzable antifouling coating composition (q) (including a solvent) taken as 100 mass%.

⟨(I) Plasticizers⟩

The hydrolyzable antifouling coating composition (q) preferably contains a plasticizer (I) to enhance the crack resistance of the obtainable antifouling coating films. Examples of the plasticizers (I) include paraffin chlorides (chlorinated paraffins), petroleum resins, ketone resins, TCP (tricresyl phosphate), polyvinyl ethyl ethers and dialkyl phthalates. To attain enhancements in coating film water resistance (mechanical characteristics) and coating film hydrolyzability (consumption properties) of antifouling coating films formed from the antifouling coating composition, the plasticizer (I) is preferably a paraffin chloride (chlorinated paraffin), a petroleum resin or a ketone resin. The plasticizers (I) may be used singly, or two or more may be used in combination.

The paraffin chlorides may have a linear or branched molecular structure, and may be liquid or solid (for example, powdery) at room temperature (for example, 23°C).

The paraffin chlorides usually have an average number of carbon atoms of 8 to 30, or preferably 10 to 26 per molecule. The incorporation of such a paraffin chloride allows the antifouling coating composition to form antifouling coating films that rarely suffer problems such as cracking (breakage) and peeling. If the average number of carbon atoms is less than 8, the antifouling coating films may not be effectively rendered resistant to cracking sufficiently. If, on the other hand, the average number of carbon atoms exceeds 30, the hydrolyzability (renewability, self-polishing properties) of antifouling coating films may be reduced and consequently the antifouling properties are sometimes deteriorated.

In the paraffin chlorides, the viscosity (unit: P, measured at 25°C) is usually not less than 1, and preferably not less than 1.2, and the specific gravity (25°C) is usually 1.05 to 1.80, and preferably 1.10 to 1.70.

The chlorination ratio (chlorine content) of the paraffin chlorides is usually 35 to 70 mass%, and preferably 35 to 65 mass% of the paraffin chloride taken as 100 mass%. The incorporation of a paraffin chloride having this chlorination ratio allows the antifouling coating composition to form coating films that rarely suffer problems such as cracking (breakage) and peeling. Specific examples of the paraffin chlorides include "TOYOPARAX 150" and "TOYOPARAX A-70" (both manufactured by TOSOH CORPORATION).

Examples of the petroleum resins include C5 resins, C9 resins, styrene resins, dichloropentadiene resins, and hydrogenated products of these petroleum resins. Specific examples of the petroleum resins include "Quintone 1500" and "Quintone 1700" (both manufactured by ZEON CORPORATION).

To attain enhancements in coating film hydrolyzability (consumption properties), antifouling properties and coating film water resistance (mechanical characteristics) of antifouling coating films formed from the antifouling coating composition, the content of the plasticizer (I) in the hydrolyzable antifouling coating composition (q) is preferably 0.1 to 300 parts by mass, more preferably 0.1 to 200 parts by mass, and still more preferably 0.1 to 150 parts by mass with respect to 100 parts by mass of the hydrolyzable copolymer (A) .

The content of the plasticizer (I) is usually about 0.1 to 30 mass%, and preferably about 0.1 to 20 mass% of the hydrolyzable antifouling coating composition (q) (including a solvent) taken as 100 mass%.

((J) Anti-sagging agents)

To reduce the occurrence of sagging of the antifouling coating composition when the coating composition is applied to a substrate, the hydrolyzable antifouling coating composition (q) may contain an anti-sagging agent (J) (also referred to as a thickening agent).

Examples of the anti-sagging agents (J) include amide waxes, hydrogenated castor oil waxes, mixtures of these waxes, and synthetic fine powdery silica. The anti-sagging agents (J) may be used singly, or two or more may be used in combination.

In particular, the anti-sagging agent (J) is preferably amide wax or synthetic fine powdery silica. The use of amide wax or synthetic fine powdery silica as the anti-sagging agent (J) makes it possible to enhance the storage stability of the antifouling coating composition, and to prevent a decrease in adhesion (interlayer adhesion, overcoatability) of the antifouling coating film with respect to a coating film (overcoating film) that is formed thereon by the application of the same kind of coating composition (antifouling coating composition) or a different kind of coating composition onto the antifouling coating film.

Some example commercially available anti-sagging agents (J) are "DISPARLON A630-20X" (manufactured by Kusumoto Chemicals, Ltd.) and "ASAT-250F" (manufactured by ITCH OIL CHEMICALS CO., LTD.).

In the hydrolyzable antifouling coating composition (q), the content of the anti-sagging agent (J) is preferably 0.1 to 100 parts by mass, and more preferably 0.1 to 50 parts by mass with respect to 100 parts by mass of the hydrolyzable copolymer (A). The content of the anti-sagging agent (J) is usually about 0.1 to 20 mass%, and preferably about 0.1 to 10 mass% of the hydrolyzable antifouling coating composition (q) (including a solvent) taken as 100 mass%. Controlling the content of the anti-sagging agent (J) in the above range makes it possible to enhance the storage stability of the antifouling coating composition, and to prevent a decrease in adhesion (interlayer adhesion, overcoatability) of the antifouling coating film with respect to a coating film (overcoating film) that is formed thereon by the application of the same kind of coating composition (antifouling coating composition) or a different kind of coating composition onto the antifouling coating film.

⟨(K) Anti-settling agents⟩

To prevent the generation of precipitates during storage of the coating composition and to attain enhanced stirrability, the hydrolyzable antifouling coating composition (q) may contain an anti-settling agent (K).
Examples of the anti-settling agents (K) include steates of Al, Ca or Zn, polyethylene waxes and polyethylene oxide-based waxes. The anti-settling agents (K) may be used singly, or two or more may be used in combination.
In particular, the anti-settling agent (K) is preferably polyethylene oxide-based wax. An example commercially available polyethylene oxide-based wax is "DISPARLON 4200-20" (manufactured by Kusumoto Chemicals, Ltd.).
In the hydrolyzable antifouling coating composition (q), the content of the anti-settling agent (K) is preferably 0.1 to 100 parts by mass, and more preferably 0.1 to 50 parts by mass with respect to 100 parts by mass of the hydrolyzable copolymer (A). The content of the anti-settling agent (K) is usually about 0.1 to 20 mass%, and preferably about 0.1 to 10 mass% of the hydrolyzable antifouling coating composition (q) (including a solvent) taken as 100 mass%. Controlling the content of the anti-settling agent (K) in the above range makes it possible to enhance the storage stability of the antifouling coating composition, and to prevent a decrease in adhesion (interlayer adhesion, overcoatability) of the antifouling coating film with respect to a coating film (overcoating film) that is formed thereon by the application of the same kind of coating composition (antifouling coating composition) or a different kind of coating composition onto the antifouling coating film.

((L) Dehydrating agents)

While the hydrolyzable antifouling coating composition (q) exhibits excellent storage stability by its containing the hydrolyzable copolymer (A) having good storage stability, still enhanced long-term storage stability may be obtained by adding a dehydrating agent (L) as required. The dehydrating agent (L) is preferably at least one dehydrating agent selected from the group of inorganic dehydrating agents consisting of synthetic zeolite, anhydrous gypsum and hemihydrate gypsum, and the group of organic dehydrating agents consisting of alkoxysilanes such as tetramethoxysilane, tetraethoxysilane, tetrabutoxysilane, tetraphenoxysilane, methyltriethoxysilane, dimethyldiethoxysilane and trimethylethoxysilane, or polyalkoxysilanes that are condensates of the alkoxysilanes, and alkyl orthoformate esters such as methyl orthoformate and ethyl orthoformate. The content of the dehydrating agent (L) is preferably 0.1 to 50 parts by mass with respect to 100 parts by mass of the hydrolyzable copolymer (A).

⟨(M) Solvents⟩

The hydrolyzable antifouling coating composition (q) may contain a solvent (M) such as water or an organic solvent as required in order to enhance the dispersibility of components such as the hydrolyzable copolymer (A) and to control the viscosity of the composition. In the antifouling coating composition (q), the solvent (M) may be a solvent used in the preparation of the hydrolyzable copolymer (A) or may be a solvent newly added during mixing of the hydrolyzable copolymer (A) and other components as required.
Examples of the organic solvents include aromatic organic solvents such as xylene, toluene and ethylbenzene; ketones such as methyl ethyl ketone, methyl isobutyl ketone and cyclohexanone; aliphatic (having about 1 to 10 carbon atoms, or preferably about 2 to 5 carbon atoms) monohydric alcohols such as ethanol, isopropyl alcohol, n-butanol and isobutanol; and ester solvents such as ethyl acetate and butyl acetate. The solvents (M) may be used singly, or two or more may be used in combination.
In the antifouling coating composition (q), the content of the solvent (M) is preferably 100 to 500 parts by mass, and more preferably 150 to 350 parts by mass with respect to 100 parts by mass of the hydrolyzable copolymer (A) . In most cases, the content of the solvent (M) in the hydrolyzable antifouling coating composition (q) is usually 20 to 80 mass%, and preferably 30 to 70 mass% of the antifouling coating composition taken as 100 mass%.

(Methods for producing antifouling coating compositions)

The hydrolyzable antifouling coating composition (q) may be produced using a known method appropriately. For example, the hydrolyzable copolymer (A), the rosin and/or the monocarboxylic acid compound (B) and, as required, the components (C) to (M) may be added to a stirring vessel at once or in any order and may be mixed together with use of a known stirring and mixing device so as to disperse or dissolve the components in the solvent.

The antifouling coating composition is preferably prepared in such a manner that the components such as the hydrolyzable copolymer (A) are dispersed or dissolved into the solvent as described above, and thereafter an amide wax (such as, for example, DISPARLON A630-20X) is added and dispersed (for example, about 10 to 20 minutes) . The antifouling coating composition obtained in this manner is advantageously less prone to sag when applied to a substrate.

As described hereinabove, the solvent (M) may be used at the time of preparation of the hydrolyzable copolymer (A).

Examples of the stirring and mixing devices include high-speed dispersers, sand grinding mills, basket mills, ball mills, three-roll mills, ROSS mixers, planetary mixers and universal Shinagawa agitators.

An antifouling coating film (Q) that is formed from the hydrolyzable antifouling coating composition (q) produced as described above may strongly adhere to an epoxy resin-based coating film and may exhibit long-term antifouling properties, long-term water resistance and damage resistance.

(Antifouling composite coating films)

An antifouling composite coating film according to the present invention includes a stack including an antifouling coating film (Q) formed from the above-described hydrolyzable antifouling coating composition (q) (an antifouling coating film that is a cured film of the hydrolyzable antifouling coating composition (q)) formed on an epoxy resin-based coating film (an epoxy resin-containing coating film) (P).

As mentioned earlier, the antifouling coating film (Q) formed from the hydrolyzable antifouling coating composition (q) may strongly adhere to the epoxy resin-based coating film (P). Even in the case where the interval between their coating applications is long, the antifouling coating film (Q) may strongly adhere to the epoxy resin-based coating film (P). Thus, the antifouling composite coating film of the present invention is excellent in long-term antifouling properties, long-term water resistance and damage resistance.

(Epoxy resin-based coating films (P))

The epoxy resin-based coating film (P) is obtained from an epoxy resin-based coating composition (p).

The epoxy resin-based coating composition (p) includes a bisphenol-type epoxy resin (p-1), a vinyl-based copolymer (p-2) and an amine-based curing agent (p-3).

⟨Bisphenol-type epoxy resins (p-1)⟩

The bisphenol-type epoxy resin that is used preferably has an epoxy equivalent of 160 to 500, and still more preferably 180 to 500. Such an epoxy resin is usually liquid to solid. The above range of the epoxy equivalent of the bisphenol-type epoxy resin added to the coating composition of the invention is advantageous from the points of view of the adhesiveness of the coating composition and the workability during the coating application.

Because the epoxy resin used in the invention is of bisphenol type, films formed by application are tough and flexible and thereby exhibit excellent adhesiveness.

Specific examples of such bisphenol-type epoxy resins include epoxy resins of bisphenol A type and bisphenol F type, dimer acid-modified epoxy resins, polysulfide-modified epoxy resins, and hydrogenated products of these bisphenol-type epoxy resins.

Examples of the bisphenol A-type epoxy resins include bisphenol A-type diglycidyl ethers such as bisphenol A diglycidyl ether, bisphenol A polypropylene oxide diglycidyl ether, bisphenol A ethylene oxide diglycidyl ether, hydrogenated bisphenol A diglycidyl ether and hydrogenated bisphenol A propylene oxide diglycidyl ether. Examples of the bisphenol F-type epoxy resins include bisphenol F-type diglycidyl ethers such as bisphenol F diglycidyl ether.

Of these, bisphenol A-type epoxy resins are preferable.

Examples of commercial products of the bisphenol A-type epoxy resins which are liquid at room temperature include "jER 828 (trade name)" (manufactured by Mitsubishi Chemical Corporation, epoxy equivalent: 184 to 194, viscosity: 12,000 to 15,000 cPs/25°C), "EPOTOHTO YDF-170 (trade name)" (manufactured by Tohto Kasei Co., Ltd., epoxy equivalent: 160 to 180, viscosity: 2,000 to 5,000 cPs) and "FLEP 60 (trade name) " (manufactured by Toray Thiokol Co., Ltd, epoxy equivalent: about 280, viscosity: about 17,000 cPs/25°C); those which are semisolid at room temperature include "jER 834-90X (trade name)" (manufactured by Mitsubishi Chemical Corporation, epoxy equivalent: 230 to 270) and "EPOTOHTO YD134 (trade name)" (manufactured by Tohto Kasei Co., Ltd., epoxy equivalent: 230 to 270) ; and those which are solid at room temperature include "jER 1001-75X (trade name)" (manufactured by Mitsubishi Chemical Corporation, epoxy equivalent: 450 to 500).

These bisphenol-type epoxy resins may be used singly, or two or more may be used in combination.

In the invention, an epoxy resin other than those mentioned above may be used together with the bisphenol-type epoxy resin (p-1). For example, an epoxy resin other than bisphenol types may be used in a small amount that is not detrimental to the objects of the present invention, for example, in an amount of not more than 60 parts by mass with respect to 100 parts by mass of the bisphenol-type epoxy resin (p-1) .

Examples of such non-bisphenol-type epoxy resins include cyclic aliphatic epoxy resins, acyclic aliphatic epoxy resins, and epoxidized oil-type epoxy resins.

⟨Vinyl-based copolymers (p-2)⟩

Examples of the vinyl-based copolymers (p-2) include vinyl chloride-vinyl acetate copolymer, vinyl chloride-vinyl propionate copolymer, vinyl chloride-vinyl alkyl ether copolymer, vinyl chloride-acrylonitrile copolymer, vinyl chloride-diethyl maleate copolymer, vinyl chloride-ethylene copolymer, vinyl chloride-maleic anhydride copolymer, vinyl chloride-alkyl (meth)acrylate copolymer (alkyl group: about 1 to 5 carbon atoms), vinyl chloride-styrene copolymer, vinyl chloride-vinylidene chloride copolymer, vinyl chloride-vinyl stearate copolymer, vinyl chloride-maleic acid (or maleate ester) copolymer, vinyl chloride-aliphatic vinyl copolymer and ethylene-vinyl acetate copolymer.

Examples further include graft-modified polyvinyl chlorides obtained by grafting "additional monomers" other than vinyl chloride onto vinyl chloride-based copolymers, and copolymers obtained by grafting vinyl chloride monomers onto "other polymers" other than polyvinyl chlorides.

Examples of the "additional monomers" include those monomers mentioned in the above vinyl chloride-based copolymers, specifically, alkyl (meth)acrylate esters (alkyl group: about 1 to 5 carbon atoms), styrene, acrylonitrile, diethyl maleate, olefins (e.g.: ethylene, propylene), maleic anhydride, vinylidene chloride, stearic acid, maleic acid, maleate esters and aliphatic vinyls.

Of the vinyl-based copolymers (p-2), vinyl chloride-vinyl alkyl ether copolymer and ethylene-vinyl acetate copolymer are preferable because they have particularly high affinity for the bisphenol-type epoxy resin (p-1) and provide excellent overcoatability and corrosion resistance.

In particular, preferred vinyl chloride-vinyl alkyl ether copolymers are copolymers of vinyl chloride and a vinyl alkyl ether in which the alkyl group has 1 to 10, preferably 2 to 5 carbon atoms. For example, among others, vinyl chloride-vinyl isobutyl ether copolymer, vinyl chloride-vinyl isopropyl ether copolymer, and vinyl chloride-vinyl ethyl ether copolymer are preferably used.

Desirably, the weight average molecular weight (Mw) of the vinyl-based copolymer (p-2) is usually 10,000 to 100,000, preferably 20,000 to 50,000, and particularly preferably 22,000 to 40,000. When the weight average molecular weight is in the above range, the affinity for epoxy resins tends to be improved.

Of the vinyl chloride-vinyl alkyl ether copolymers, examples of the vinyl chloride-vinyl isobutyl ether copolymers include "Laroflex LR8829 (trade name)", "Laroflex MP25 (trade name)", "Laroflex MP35 (trade name)" and "Laroflex MP45 (trade name)" manufactured by BASF.

The vinyl-based copolymers may be used singly, or two or more may be used in combination.

The vinyl-based copolymer (p-2) is usually used in an amount of 5 to 40 parts by mass, and preferably 7 to 30 parts by mass with respect to 100 parts by mass of the bisphenol-type epoxy resin (p-1) . When contained in this amount in the coating composition, the vinyl-based copolymer (p-2) tends to attain good affinity for the bisphenol-type epoxy resin (p-1) and provide good corrosion resistance and overcoatability. From the points of view of the anticorrosive performance of coating films and the overcoatability with overcoating paints, the proportion of the vinyl-based copolymer (p-2) desirably falls in the above range.

In the present invention, the vinyl-based copolymer (p-2) may be used together with an "additional thermoplastic resin" other than the vinyl-based copolymers (p-2) while still achieving the objects of the invention. When the epoxy resin-based coating composition contains such an additional thermoplastic resin, the content of the additional thermoplastic resin may be such that the total amount of the thermoplastic resin components including the vinyl-based copolymer (p-2) is usually 5 to 40 parts by mass, preferably 7 to 30 parts by mass, and particularly preferably 10 to 30 parts by mass with respect to 100 parts by mass of the bisphenol-type epoxy resin (p-1).

The thermoplastic resins including the vinyl-based copolymer (p-2) serve to relax internal stress during curing of the epoxy resin-based coating composition (p) so as to improve the adhesion of the epoxy layer formed by the application and curing of the epoxy paint with respect to a base or an undercoat layer. Further, such thermoplastic resins are soluble in solvents, and are therefore dissolved by the solvent in an overcoating paint. Consequently, the thermoplastic resins allow the epoxy layer to attain enhanced adhesion with respect to the overcoating paint and allow the interval after the coating application of the epoxy paint to be extended (the limitation on the time interval is eased), thus contributing to the expansion of variety of overcoating paints applicable onto the epoxy layer.

Specific examples of the thermoplastic resins other than the vinyl-based copolymers (p-2) include chlorinated polyolefins such as chlorinated rubber, chlorinated polyethylene and chlorinated polypropylene; acrylic resins such as methyl (meth)acrylate-based copolymers, propyl (meth)acrylate-based copolymers, butyl (meth)acrylate-based copolymers and cyclohexyl (meth)acrylate-based copolymers; styrene-based resins; aromatic petroleum resins; aliphatic petroleum resins; condensed urea-aldehyde resins; ketone-based resins; coumarone-indene resins; and pentadiene-based polymers.

The thermoplastic resins may be used singly, or two or more may be used in combination.

⟨Amine-based curing agents (p-3)

The amine-based curing agent (p-3) is usually of such a type as, for example, aliphatic, alicyclic, aromatic or heterocyclic. The epoxy resin-based coating composition (p) containing such an amine-based curing agent (p-3) can be cured at room temperature and is therefore suitable for applications where the coating application takes place in a room-temperature environment.

Examples of the aliphatic amines include diethylenetriamine, dipropylenetriamine, tetraethylenepentamine, trimethylhexamethylenediamine, tetrakis(2-aminoethylaminomethyl)methane, 1,3-bis(2'-aminoethylamino)propane, triethylene-bis(trimethylene)hexamine, bis(3-aminoethyl)amine, bis(cyanoethyl)diethylenetriamine, and bishexamethylenetriamine $[H_2N(CH_2)_6NH(CH_2)_6NH_2]$.

Examples of the alicyclic amines include 4-cyclohexanediamine, 4,4'-methylenebiscyclohexylamine, 4,4'-isopropylidenebiscyclohexylamine, norbornanediamine (NBDA/2,5- and 2,6-bis(aminomethyl)-bicyclo[2,2,1]heptane), bis(aminomethyl)cyclohexane, diaminodicyclohexylmethane, isophoronediamine (IPDA/3-aminomethyl-3,5,5-trimethylcyclohexylamine) and menthenediamine.

Examples of the aromatic amines include bis(aminoalkyl)benzenes, bis(aminoalkyl)naphthalenes and aromatic polyamine compounds having two or more primary amino groups bonded to the benzene ring. Specific examples include o-xylylenediamine, m-xylylenediamine (MXDA), p-xylylenediamine, phenylenediamine, naphthylenediamine, diaminodiphenylmethane, diaminodiethylphenylmethane, 2,2-bis(4-aminophenyl)propane, 4,4'-diaminodiphenyl ether, 4,4'-diaminobenzophenone, 4,4'-diaminodiphenyl ether, 4,4'-diaminodiphenylsulfone, 2,2'-dimethyl-4,4'-diaminodiphenylmethane, 2,4-diaminobiphenyl, 2,3'-dimethyl-4,4'-diaminobiphenyl, 3,3'-dimethoxy-4,4'-diaminobiphenyl, bis(aminomethyl)naphthalene, bis(aminoethyl)naphthalene and 2,4,6-tris(3-aminomethylphenylmethylaminomethyl)phenol.

Examples of the heterocyclic amines include N-methylpiperazine, morpholine, 1,4-bis-(3-aminopropyl)-piperazine, piperazine-1,4-diazacycloheptane, 1-(2'-aminoethylpiperazine), 1-[2'-(2"-aminoethylamino)ethyl]piperazine, 1,11-diazacycloeicosane and 1,15-diazacyclooctacosane.

Further, modified products of the above amines such as polyamides of the above amines and modified products thereof, epoxy adducts with epoxy compounds, Mannich modified products and carboxylic acid-modified products may be also used.

Of the above compounds, polyamides and modified products thereof are preferable in terms of corrosion resistance and adhesion.

Desirably, the amine value of the amine-based curing agent (p-3) is usually 50 to 1,000, and preferably 80 to 500. When the amine value of the curing agent is in this range, the balance between drying properties and adhesiveness tends to be enhanced. The curing agents having such an amine value are usually liquid to solid.

Specific examples of such polyamides include "LUCKAMIDE N-153 (trade name)" (manufactured by DIC CORPORATION, amine value: 80 to 120), "LUCKAMIDE TD-966 (trade name)" (manufactured by DIC CORPORATION, amine value: 150 to 190), and "SUNMIDE 315 (trade name)" (manufactured by Sanwa Chemical Industry Co., Ltd., amine value: 280 to 340).

Specific examples of the modified products of polyamides include "PA-23 (trade name)" (manufactured by Ohtake-Meishin Chemical Co., Ltd., amine value: 80 to 150) that is an epoxy adduct obtained by adding an epoxy compound to a polyamide, and "ADEKA HARDENER EH-350 (trade name)" (manufactured by ADEKA CORPORATION, amine value: 320 to 380) that is a Mannich modified product of modified polyamide.

Of these polyamides and modified products thereof, adducts with epoxy compounds are preferably used.

Other modified amines may be specifically exemplified by a variety of compounds such as "Ancamine 2074 (trade name)" (manufactured by Air Products and Chemicals, Inc., amine value : 325 to 355) that is a modified alicyclic polyamine, "Cardolite 541LV (trade name)" (manufactured by Cardolite Corporation, amine value: 260 to 350) and "Cardolite CM-5055 (trade name)" (manufactured by Cardolite Corporation, amine value: 150 to 250) that are modified phenalkamines, and "ADEKA HARDENER EH-101 (trade name)" (manufactured by ADEKA CORPORATION, amine value: 400 to 500) that is a modified aromatic polyamine.

Further, use may be made of ketimine-type curing agents obtained by modifying the above amine compounds with ketones. Specific examples include "Ancamine MCA (trade name)" (manufactured by Air Products and Chemicals, Inc., amine value : 250 to 350) that is a ketimine-type modified alicyclic polyamine.

The amine-based curing agents (p-3) may be used singly, or two or more may be used in combination.

In the invention, the amine-based curing agent (p-3) is desirably used in such an amount that the equivalent ratio of the epoxy components in the bisphenol-type epoxy resin (p-1) in the epoxy resin-based coating composition (p) to the amine components (epoxy components:amine components) is usually 1:0.25 to 1:0.9, and preferably 1:0.3 to 1:0.8. When the amine-based curing agent (p-3) is used in such an amount, the obtainable coating film tends to attain excellent drying properties, corrosion resistance and overcoatability. In other words, the amine-based curing agent (p-3) in the invention is usually used in an amount of 10 to 80 parts by mass, and preferably 20 to 70 parts by mass with respect to 100 parts by mass of the bisphenol-type epoxy resin (p-1) in the epoxy resin-based coating composition (p).

In the invention, an "additional epoxy resin curing agent" other than the amine-based curing agent (p-3) may be used while still achieving the objects of the invention.

The "additional epoxy resin curing agent" is not particularly limited as long as it can react with and cure the epoxy resin. Examples thereof include carboxylic acid-based curing agents, acid anhydride-based curing agents and silanol-based curing agents other than the amine-based curing agents (p-3) described hereinabove.

(Other additives)

The epoxy resin-based coating composition (p) may contain various additives such as plasticizers, extender pigments, color pigments, anticorrosive pigments, solvents, curing accelerators, coupling agents, anti-sagging agents and anti-settling agents.

The epoxy resin-based coating composition (p) (epoxy resin paint) including the components (p-1), (p-2) and (p-3) is used as a two-component paint that includes a base component including the epoxy resin (p-1) and the vinyl-based copolymer (p-2), and a curing agent including the amine-based curing agent (p-3), or is used as a two-component paint that includes a base component including the epoxy resin (p-1), and a curing agent including the vinyl-based copolymer (p-2) and the amine-based curing agent (p-3). The two-component system is desirable in the invention.

Specifically, a composition including the components (p-1) and (p-3) is suitably used as an epoxy resin-based anticorrosive coating composition (p1), and a composition including the components (p-1), (p-2) and (p-3) is suitably used as an epoxy resin-based anticorrosive coating composition (p1) and as an epoxy resin-based binder coating composition (p2). The epoxy resin-based anticorrosive coating composition (p1) and the epoxy resin-based binder coating composition (p2) may contain additives described hereinabove.

In the present specification, a coating film obtained from the epoxy resin-based anticorrosive coating composition (p1) is referred to as an epoxy resin-based anticorrosive coating film (P1), and a coating film obtained from the epoxy resin-based binder coating composition (p2) is referred to as an epoxy resin-based binder coating film (P2).

(Antifouling composite coating films)

An antifouling composite coating film is obtained by stacking an antifouling coating film (Q) of the hydrolyzable antifouling coating composition (q) onto an epoxy resin-based coating film (P) described above. Specific examples of the configurations of the composite coating films include epoxy resin-based anticorrosive coating film (P1)/antifouling coating film (Q), epoxy resin-based anticorrosive coating film (P1)/epoxy resin-based binder coating film (P2)/antifouling coating film (Q), and epoxy resin-based binder coating film (P2)/antifouling coating film (Q). The epoxy resin-based anticorrosive coating film (P1), the epoxy resin-based binder coating film (P2) and the antifouling coating film (Q) may each be provided plurally and stacked on one another. In the present invention, the epoxy resin-based coating film (P) and the antifouling coating film (Q) can be strongly bonded directly to each other even without the use of a vinyl resin-based binder coating.

A method for producing the composite coating films, that is, a method of stacking the antifouling coating film (Q) onto the epoxy resin-based coating film (P) will be described in detail in association with antifouling substrates later.

(Antifouling substrates and methods for production thereof)

An antifouling substrate of the invention includes a substrate and the antifouling composite coating film that are stacked in the order of substrate/epoxy resin-based coating film (P)/antifouling coating film (Q). Specific examples of the configurations of the antifouling composite coating film (epoxy resin-based coating film (P)/antifouling coating film (Q)) include those described hereinabove.

The antifouling substrate is not particularly limited, but is preferably one which is subjected to contact with seawater or freshwater. Specific examples thereof include underwater structures such as water supply inlets and drains in various power plants (thermal power plants and nuclear power plants), and sludge diffusion prevention fences used in various offshore or river engineering works for building structures such as coast roads, submarine tunnels, port facilities, and canals or waterways, outside shells of a ship (in particular, portions from the draft line to the bottom of a ship), and fishery materials (such as fishing gears including ropes and fishing nets, floats and buoys).

The substrates used in the antifouling substrates may be of any materials without limitation as long as the substrates require precautions for problems such as fouling in water. In particular, example materials for ships include steel, aluminum, wood and FRP, and example materials for such items as floats and buoys include synthetic resins.

The antifouling substrate of the invention may be obtained by forming an epoxy resin-based anticorrosive coating film (P) onto a surface of a substrate, and painting the coating film with the hydrolyzable antifouling coating composition (q) to form an antifouling coating film (Q). That is, in the antifouling substrate production method, layers are stacked in the order of substrate/epoxy resin-based coating film (P)/antifouling coating film (Q). More specifically, layers may be stacked in the order of substrate/epoxy resin-based anticorrosive coating film (P1) /antifouling coating film (Q), in the order of substrate/epoxy resin-based anticorrosive coating film (P1)/epoxy resin-based binder coating film (P2)/antifouling coating film (Q), or in the order of substrate/epoxy resin-based binder coating film (P2)/antifouling coating film (Q). The epoxy resin-based anticorrosive coating film (P1), the epoxy resin-based binder coating film (P2) and the antifouling coating film (Q) may each define a plurality of layers in the stack. The substrate may be primer-treated. The epoxy resin-based coating film (P) is preferably stacked directly onto the substrate. The antifouling coating film (Q) is stacked directly onto the epoxy resin-based coating film (P).

In the antifouling substrate production method, for example, the epoxy resin-based paint is applied directly onto the substrate or after the surface of the substrate has been coated with a primer, that is, onto the surface of the primer-treated substrate, and the paint is cured to form an epoxy resin-based coating film (P); thereafter the hydrolyzable antifouling coating composition (q) is applied one or more times and the antifouling coating composition applied is cured to form an antifouling coating film (Q).

Specifically, the hydrolyzable antifouling coating composition (q) is applied onto the substrate coated with the epoxy resin-based coating film (P), with use of a coating device such as, for example, an air sprayer, an airless sprayer, a brush or a roller, or the coated substrate is impregnated with the antifouling composition, and the coating composition that has been caused to coat or impregnate the substrate is dried and cured by, for example, natural drying (drying at about room temperature) or by the use of a drying device such as a heater, thereby forming an antifouling coating film (Q) on the substrate. As described, the antifouling coating film (Q) is formed by curing the hydrolyzable antifouling coating composition (q) by, for example, natural drying or by the use of a drying device such as a heater.

The epoxy resin-based coating film (P) and the antifouling coating film (Q) disposed on the surface of the substrate exhibit excellent performance (antifouling properties, in particular, static antifouling properties) in preventing the attachment of aquatic organisms such as sea lettuce, barnacles, green laver, serpula, oysters and bryozoans (Bugula neritina) over a long period. When, in particular, the antifouling coating film (Q) contains an antifouling component (e.g.: cuprous oxide or an inorganic copper compound (component C or D) or an organic antifouling agent (component E)), such antifouling components can be gradually released over a long period of time.

When, in particular, the substrate is outside shell of a ship (in particular, ship bottom), an underwater structure or the like that is made of steel, an antifouling substrate suitably used includes a stack including an epoxy resin-based anticorrosive coating film (P) formed from the epoxy resin-based anticorrosive paint directly onto the steel surface or onto the surface of a cured anticorrosive paint such as an epoxy resin-based paint applied onto the surface of the substrate for corrosion protection, thereby forming, and an antifouling coating film (Q) formed by applying the hydrolyzable antifouling coating composition (q) several times (in large thickness: dry thickness of about 100 to 1000 $\mu$m, or about 100 to 600 $\mu$m) in this order. Such an antifouling substrate attains excellent coating film adhesion and antifouling properties, and shows appropriate flexibility and outstanding crack resistance in a well-balanced manner.

The surface of the substrate which already has the antifouling coating film of the invention or a conventional antifouling coating film may be overcoated with the layered antifouling coating film (the antifouling composite coating film) of the invention for the purpose of repairing.

The thickness of the antifouling coating film (Q) formed by one coating application is not particularly limited. When the substrate is a ship or an underwater structure, the thickness is, for example, about 30 to 250 $\mu$m per coating application.

As discussed hereinabove, ships and underwater structures having the antifouling composite coating film of the invention can be prevented from the attachment of aquatic organisms over a long period, and can consequently exhibit excellent adhesion over a long period and can maintain the functions of the ships and underwater structures over a long period.

[EXAMPLES]

Hereinbelow, the present invention will be described in further detail based on Examples. However, it should be construed that the invention is not limited to such Examples. In "Examples", "%" means mass% unless otherwise mentioned.

[Production Example 1]

A reaction vessel equipped with a stirrer, a reflux condenser, a thermometer, a nitrogen inlet tube and a dropping funnel was loaded with 53 parts by mass of xylene. While the xylene was stirred with the stirrer in a nitrogen atmosphere, heating was performed under normal pressure until the temperature of the xylene in the reaction vessel reached 85°C. While maintaining the temperature of the xylene in the reaction vessel at 85°C, 60 parts by mass of TIPSMA (triisopropylsilyl methacrylate), 20 parts by mass of MEMA (2-methoxyethyl methacrylate) and a monomer mixture including 10 parts by mass of MMA (methyl methacrylate), 10 parts by mass of BA (butyl acrylate) and 1 part by mass of AMBN (2,2'-azobis(2-methylbutyronitrile)) were added to the reaction vessel through the dropping funnel over a period of 2 hours.

Next, 0.5 parts by mass of t-butyl peroxyoctoate was added to the reaction vessel. The mixture was stirred with the stirrer under normal pressure for 2 hours while maintaining the liquid temperature in the reaction vessel at 85°C. The liquid temperature in the reaction vessel was then increased from 85°C to 110°C, and heating was performed for 1 hour. Thereafter, 14 parts by mass of xylene was added to the reaction vessel. The liquid temperature in the reaction vessel was lowered, and stirring was terminated when the liquid temperature reached 40°C. Consequently, a polymer solution (a1) including a hydrolyzable copolymer was prepared. Properties of the polymer solution (a1) were measured in accordance with the testing conditions described later in "Evaluation of characteristics of (co)polymer solutions and (co)polymers". The results are described in Table 1.

[Production Examples 2 to 5]

Polymer solutions (a2), (a3), (b1) and (b2) including a hydrolyzable copolymer were prepared and properties were measured in the same manner as in Production Example 1, except that the monomer mixture used in Production Example 1 was replaced by a monomer mixture having a formulation described in Table 1. The results are described in Table 1.

⟨Table 1⟩ Resin Production Examples

| Production Examples | | 1 | 2 | 3 | 4 | 5 |
|---|---|---|---|---|---|---|
| Polymer solutions Nos. | | a1 | a2 | a3 | b1 | b2 |
| Solvent | Xylene | 67 | 67 | 67 | 67 | 67 |
| Components dropped | Triisopropylsilyl methacrylate | 60 | 50 | 60 | | 50 |
| | Triisopropylsilyl acrylate | | | | 50 | |
| | 2-Methoxyethyl methacrylate | 20 | 30 | | 30 | |
| | 2-Methoxyethyl acrylate | | | 20 | | |
| | Methyl methacrylate | 10 | 10 | 10 | 10 | 40 |
| | Butyl acrylate | 10 | 10 | 10 | 10 | 10 |
| | AMBN | 1 | 1 | 1 | 1 | 1 |
| | Total | 168 | 168 | 168 | 168 | 168 |
| Additional component | T-butyl peroxyoctoate | 0.5 | 0.5 | 0.5 | 0.5 | 0.5 |
| Properties evaluation | Solid content (mass%) in polymer solution | 59.8 | 60.1 | 60.5 | 60.4 | 60.5 |
| | Viscosity (mPa·s/25°C) of polymer solution | 3,001 | 2,430 | 2,210 | 2,653 | 4,055 |
| | Weight average molecular weight (Mw) | 36,870 | 34,980 | 35,940 | 34,900 | 34,850 |

[Production Example 6] Production of gum rosin copper salt

A 1,000 ml flask equipped with a thermometer, a reflux condenser and a stirrer was loaded with 400 g of a xylene solution of China gum rosin (WW rosin, acid value: 172) (solid content: 50%), 200 g of cuprous oxide and 100 g of methanol. Glass beads (2.5 to 3.5 mm in diameter) were added, and the mixture was stirred at 70 to 80°C for 8 hours and was kept warm at 50°C for 2 days. The resultant mixture solution was cooled to room temperature (25°C) and was filtered. The filtrate was vacuum concentrated and thereby methanol components were distilled away. Xylene was added to the concentrated liquid. A xylene solution of gum rosin copper salt (dark blue transparent solution, approximately 50% solid content) was thus obtained. The xylene solution of gum rosin copper salt contained 50.8% thermal residues. This gum rosin copper salt was used in Comparative Example 3 described later.

[Production Example 7] Production of gum rosin zinc salt

A 1,000 ml flask equipped with a thermometer, a reflux condenser, a stirrer, a thermometer and a dropping device was loaded with 300 g of China gum rosin (WW rosin, acid value: 172), 50 g of zinc oxide and 150 g of xylene. Stirring was performed at 70 to 80°C for 4 hours under a stream of nitrogen, resulting in a transparent solution. Thereafter, water was removed by azeotropic dehydration with xylene, and the resultant liquid was kept warm at 50°C for 2 days. The resultant mixture solution was cooled to room temperature (25°C) and was filtered. Xylene was added. A xylene solution of gum rosin zinc salt (yellow transparent solution, approximately 50% solid content) was thus obtained. The xylene solution of gum rosin zinc salt contained 50. 5% thermal residues . This gum rosin zinc salt was used in Comparative Example 4 described later.

[Example 1]

A plastic container (volume: 500 ml) was loaded with 19.8 parts by mass of xylene as a solvent (M), 17.8 parts by mass of the polymer solution (a1), and 2.1 parts by mass of rosin as a component (B) . The mixture was mixed with use of a paint shaker until the components were uniformly dispersed or dissolved. Thereafter, the plastic container was further loaded with 45 parts by mass of NC-301 as a component (C), and additives (3 parts by mass of talc FC-1, 4 parts by mass of zinc flower No. 3, 0.3 parts by mass of Novoperm Red F5RK, 2 parts by mass of titanium white R-5N, 1 part by mass of copper pyrithione, 2 parts by mass of DISPARLON 4200-20, and 0.5 parts by mass of Ethyl Silicate 28) . These components were dispersed by stirring with the paint shaker for 1 hour.

After the dispersing process, 2.5 parts by weight of DISPARLON A630-20X was added, and the mixture was stirred with the paint shaker for 20 minutes. The residues were removed by filtering the mixture through a filter net (opening: 80 mesh), and a filtrate (a coating composition A1) was thus obtained.

An antifouling composite coating film was obtained as described later in ⟨Fabrication and evaluation of antifouling composite coating films⟩.

[Examples 2 to 12 and Comparative Examples 1 to 5]

Coating compositions were prepared in the same manner as in Example 1, except that the solvent, the polymer solution, the components B and C, and the additives used in Example 1 were changed as described in Tables 2 and 3.

Further, antifouling composite coating films were obtained as described later in (Fabrication and evaluation of antifouling composite coating films).

Characteristics of the antifouling composite coating films were evaluated, the results being described in Tables 4-1 to 4-15, and 5-1 to 5-9.

Referring to Tables 4-1 to 4-15, and 5-1 to 5-9, the coating compositions A1 to A12 and the coating compositions B1 to B5 are the coating compositions obtained in Examples 1 to 12 and Comparative Examples 1 to 5, respectively.

Details such as the manufacturers of the raw materials are described in Table 6.

⟨Table 2⟩

| | Coating compositions Nos. | Examples | | | | | | | | | | | |
| --- | --- | --- | --- | --- | --- | --- | --- | --- | --- | --- | --- | --- | --- |
| | | 1 | 2 | 3 | 4 | 5 | 6 | 7 | 8 | 9 | 10 | 11* | 12* |
| | | A1 | A2 | A3 | A4 | A5 | A6 | A7 | A8 | A9 | A10 | A11 | A12 |
| Polymer solutions | a1 | 17.8 | | | | | | | | | | | |
| | a2 | | 17.8 | 17.8 | 17.8 | 17.8 | 16 | 17.8 | 17.8 | 17.8 | 17.8 | | |
| | a3 | | | | | | | | | | | | 17.8 |
| | b1 | | | | | | | | | | | 17.8 | |
| | b2 | | | | | | | | | | | | |
| Components B | Trimethylisobutenylcyclohexenecarboxylic acid (50% xylene solution) | | | | | | | 4.2 | | | | | |
| | Versatic acid | | | | | | | | 2.1 | 0.7 | 1.4 | | |
| | Rosin | 2.1 | 2.1 | 2.1 | 2.1 | 2.1 | 3.2 | | | 1.4 | 1.4 | 2.1 | 2.1 |
| Components C | LoLo Tint 97 | | 45 | | | | | | | | | | |
| | Purple Copp | | | 45 | | | | | | | | 45 | |
| | NC-803 | | | | 45 | | | | | | | | |
| | NC-301 | 45 | | | | 45 | 45 | 45 | 45 | 45 | 45 | | 45 |
| Additives | Copper pyrithione | 1 | 1 | 1 | 1 | 1 | 1 | 1 | 1 | 1 | 1 | 1 | 1 |
| | Zinc flower No. 3 | 4 | 4 | 4 | 4 | 4 | 4 | 4 | 4 | 4 | 4 | 4 | 4 |
| | Novoperm Red FSRK | 0.3 | 0.3 | 0.3 | 0.3 | 0.3 | 0.3 | 0.3 | 0.3 | 0.3 | 0.3 | 0.3 | 0.3 |
| | Titanium white R-5N | 2 | 2 | 2 | 2 | 2 | 2 | 2 | 2 | 2 | 2 | 2 | 2 |
| | DISPARLON 4200-20 | 2 | 2 | 2 | 2 | 2 | 2 | 2 | 2 | 2 | 2 | 2 | 2 |
| | Talc FC-1 | 3 | 3 | 3 | 3 | 3 | 3 | 3 | 3 | 3 | 3 | 3 | 3 |
| | Ethyl Silicate 28 | 0.5 | 0.5 | 0.5 | 0.5 | 0.5 | 0.5 | 0.5 | 0.5 | 0.5 | 0.5 | 0.5 | 0.5 |
| | Xylene | 19.8 | 19.8 | 19.8 | 19.8 | 19.8 | 20.5 | 17.7 | 19.8 | 19.8 | 19.1 | 19.8 | 19.8 |
| | DISPARLON A630-20X | 2.5 | 2.5 | 2.5 | 2.5 | 2.5 | 2.5 | 2.5 | 2.5 | 2.5 | 2.5 | 2.5 | 2.5 |
| | Total | 100 | 100 | 100 | 100 | 100 | 100 | 100 | 100 | 100 | 100 | 100 | 100 |

* Reference Example

⟨Table 3⟩

| | | | Comparative Examples | | | | |
|---|---|---|---|---|---|---|---|
| | | | 1 | 2 | 3 | 4 | 5 |
| Coating compositions Nos. | | | B1 | B2 | B3 | B4 | B5 |
| Polymer solutions | a1 | | | | | | |
| | a2 | | | | 17.8 | 17.8 | |
| | a3 | | | | | | |
| | b1 | | 17.8 | | | | 17.8 |
| | b2 | | | 17.8 | | | |
| Components B | Trimethylisobutenylcyclohexenecarboxylic acid (50% xylene solution) | | | | | | |
| | Versatic acid | | | | | | |
| | Rosin | | 2.1 | 2.1 | | | 2.1 |
| | Rosin copper salt (solid content 50%) | | | | 4.2 | | |
| | Rosin zinc salt (solid content 50%) | | | | | 4.2 | |
| Components C | LoLo Tint 97 | | | | | | |
| | Purple Copp | | | | | | 45 |
| | NC-803 | | | | | | |
| | NC-301 | | 45 | 45 | 45 | 45 | |
| Additives | zinc flower No. 3 | | 4 | 4 | 4 | 4 | 4 |
| | Novoperm Red FSRK | | 0.3 | 0.3 | 0.3 | 0.3 | 0.3 |
| | Titanium white R-5N | | 2 | 2 | 2 | 2 | 2 |
| | DISPARLON 4200-20 | | 2 | 2 | 2 | 2 | 2 |
| | Talc FC-1 | | 3 | 3 | 3 | 3 | 3 |
| | Copper pyrithione | | 1 | 1 | 1 | 1 | 1 |
| | Ethyl Silicate 28 | | 0.5 | 0.5 | 0.5 | 0.5 | 0.5 |
| | Xylene | | 19.8 | 19.8 | 17.7 | 17.7 | 19.8 |
| | DISPARLON A630-20X | | 2.5 | 2.5 | 2.5 | 2.5 | 2.5 |
| Total | | | 100 | 100 | 100 | 100 | 100 |

⟨Table 4-1: Adhesion data⟩

| 1) Adhesion with respect to epoxy paint-1 coating film | | | | | | | | | | | | | | |
|---|---|---|---|---|---|---|---|---|---|---|---|---|---|---|
| Examples | | | 1 | 2 | 3 | 4 | 5 | 6 | 7 | 8 | 9 | 10 | 11* | 12* |
| Coating compositions Nos. | | | A1 | A2 | A3 | A4 | A5 | A6 | A7 | A8 | A9 | A10 | A11 | A12 |
| | Immersion periods | Intervals between coating applications | | | | | | | | | | | | |
| Test of accelerated deterioration of adhesion after outdoor exposure | 1 Month | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 3 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 6 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 9 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 12 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| * Reference Example | | | | | | | | | | | | | | |

⟨Table 4-2: Adhesion data⟩

| 2) Adhesion with respect to epoxy paint-2 coating film | | | | | | | | | | | | | | |
|---|---|---|---|---|---|---|---|---|---|---|---|---|---|---|
| Examples | | | 1 | 2 | 3 | 4 | 5 | 6 | 7 | 8 | 9 | 10 | 11* | 12* |
| Coating compositions Nos. | | | A1 | A2 | A3 | A4 | A5 | A6 | A7 | A8 | A9 | A10 | A11 | A12 |
| | Immersion periods | Intervals between coating applications | | | | | | | | | | | | |
| Test of accelerated deterioration of adhesion after outdoor exposure | 1 Month | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 3 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 6 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 9 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 12 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| * Reference Example | | | | | | | | | | | | | | |

⟨Table 4-3: Adhesion data⟩

| 3) Adhesion with respect to epoxy paint-3 coating film | | | | | | | | | | | | | | | |
|---|---|---|---|---|---|---|---|---|---|---|---|---|---|---|---|
| | Examples | | 1 | 2 | 3 | 4 | 5 | 6 | 7 | 8 | 9 | 10 | 11* | 12* |
| | Coating compositions Nos. | | A1 | A2 | A3 | A4 | A5 | A6 | A7 | A8 | A9 | A10 | A11 | A12 |
| | Immersion periods | Intervals between coating applications | | | | | | | | | | | | | |
| Test of accelerated deterioration of adhesion after outdoor exposure | 1 Month | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 3 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 6 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 9 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 12 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| * Reference Example | | | | | | | | | | | | | | | |

⟨Table 4-4: Adhesion data⟩

| 4) Adhesion with respect to epoxy paint-4 coating film | | | | | | | | | | | | | | | |
|---|---|---|---|---|---|---|---|---|---|---|---|---|---|---|---|
| | Examples | | 1 | 2 | 3 | 4 | 5 | 6 | 7 | 8 | 9 | 10 | 11* | 12* |
| | Coating compositions Nos. | | A1 | A2 | A3 | A4 | A5 | A6 | A7 | A8 | A9 | A10 | A11 | A12 |
| | Immersion periods | Intervals between coating applications | | | | | | | | | | | | | |
| Test of accelerated deterioration of adhesion after outdoor exposure | 1 Month | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 3 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 6 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 9 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 12 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| * Reference Example | | | | | | | | | | | | | | | |

⟨Table 4-5: Adhesion data⟩

| 5) Adhesion with respect to epoxy paint-5 coating film | | | | | | | | | | | | | | | |
|---|---|---|---|---|---|---|---|---|---|---|---|---|---|---|---|
| | Examples | | 1 | 2 | 3 | 4 | 5 | 6 | 7 | 8 | 9 | 10 | 11* | 12* |
| | Coating compositions Nos. | | A1 | A2 | A3 | A4 | A5 | A6 | A7 | A8 | A9 | A10 | A11 | A12 |
| | Immersion periods | Intervals between coating applications | | | | | | | | | | | | | |
| Test of accelerated deterioration of adhesion after outdoor exposure | 1 Month | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 3 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 6 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 9 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 12 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| * Reference Example | | | | | | | | | | | | | | | |

⟨Table 4-6: Adhesion data⟩

| 6) Adhesion with respect to epoxy paint-6 coating film | | | | | | | | | | | | | | | |
|---|---|---|---|---|---|---|---|---|---|---|---|---|---|---|---|
| | Examples | | 1 | 2 | 3 | 4 | 5 | 6 | 7 | 8 | 9 | 10 | 11* | 12* |
| | Coating compositions Nos. | | A1 | A2 | A3 | A4 | A5 | A6 | A7 | A8 | A9 | A10 | A11 | A12 |
| | Immersion periods | Intervals between coating applications | | | | | | | | | | | | | |
| Test of accelerated deterioration of adhesion after outdoor exposure | 1 Month | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 3 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 6 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 9 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 12 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| * Reference Example | | | | | | | | | | | | | | | |

⟨Table 4-7: Adhesion data⟩

| 7) Adhesion with respect to epoxy paint-7 coating film | | | | | | | | | | | | | | | |
|---|---|---|---|---|---|---|---|---|---|---|---|---|---|---|---|
| | Examples | | 1 | 2 | 3 | 4 | 5 | 6 | 7 | 8 | 9 | 10 | 11* | 12* |
| | Coating compositions Nos. | | A1 | A2 | A3 | A4 | A5 | A6 | A7 | A8 | A9 | A10 | A11 | A12 |
| | Immersion periods | Intervals between coating applications | | | | | | | | | | | | | |
| Test of accelerated deterioration of adhesion after outdoor exposure | 1 Month | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 3 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 6 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 9 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | 12 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| * Reference Example | | | | | | | | | | | | | | | |

⟨Table 4-8: Static antifouling data⟩

| | Examples | | 1 | 2 | 3 | 4 | 5 | 6 | 7 | 8 | 9 | 10 | 11* | 12* |
|---|---|---|---|---|---|---|---|---|---|---|---|---|---|---|---|
| | Coating compositions Nos. | | A1 | A2 | A3 | A4 | A5 | A6 | A7 | A8 | A9 | A10 | A11 | A12 |
| Static antifouling test | Immersion periods | 1 Month | 0 | 0 | 0 | 0 | 0 | 0 | 0 | 0 | 0 | 0 | 0 | 0 |
| | | 3 Months | 0 | 0 | 0 | 0 | 0 | 0 | 0 | 0 | 0 | 0 | 0 | 0 |
| | | 6 Months | 0 | 0 | 0 | 0 | 0 | 0 | 0 | 0 | 0 | 0 | 0 | 0 |
| | | 9 Months | 0 | 0 | 0 | 0 | 0 | 0 | 0 | 0 | 0 | 0 | 0 | 0 |
| | | 12 Months | 0 | 0 | 0 | 0 | 0 | 0 | 0 | 0 | 0 | 0 | 0 | 0 |

⟨Table 4-9: Damage resistance data⟩

| 1) Damage resistance of stack of coating film with epoxy paint-1 | | | | | | | | | | | | | | | |
|---|---|---|---|---|---|---|---|---|---|---|---|---|---|---|---|
| | Examples | | 1 | 2 | 3 | 4 | 5 | 6 | 7 | 8 | 9 | 10 | 11* | 12* |
| | Coating compositions Nos. | | A1 | A2 | A3 | A4 | A5 | A6 | A7 | A8 | A9 | A10 | A11 | A12 |
| Damage resistance test | Drying conditions | 23°C/1 day | 4 | 4 | 4 | 4 | 4 | 4 | 4 | 4 | 4 | 4 | 4 | 4 |
| | | 23°C/2 days | 5 | 5 | 5 | 5 | 5 | 5 | 5 | 5 | 5 | 5 | 5 | 5 |
| | | 23°C/3 days | 5 | 5 | 5 | 5 | 5 | 5 | 5 | 5 | 5 | 5 | 5 | 5 |

⟨Table 4-10: Damage resistance data⟩

| 2) Damage resistance of stack of coating film with epoxy paint-2 | | | | | | | | | | | | | | |
|---|---|---|---|---|---|---|---|---|---|---|---|---|---|---|
| | Examples | | 1 | 2 | 3 | 4 | 5 | 6 | 7 | 8 | 9 | 10 | 11* | 12* |
| | Coating compositions Nos. | | A1 | A2 | A3 | A4 | A5 | A6 | A7 | A8 | A9 | A10 | A11 | A12 |
| Damage resistance test | Drying conditions | 23°C/1 day | 4 | 4 | 4 | 4 | 4 | 4 | 4 | 4 | 4 | 4 | 4 | 4 |
| | | 23°C/2 days | 5 | 5 | 5 | 5 | 5 | 5 | 5 | 5 | 5 | 5 | 5 | 5 |
| | | 23°C/3 days | 5 | 5 | 5 | 5 | 5 | 5 | 5 | 5 | 5 | 5 | 5 | 5 |
| * Reference Example | | | | | | | | | | | | | | |

⟨Table 4-11: Damage resistance data⟩

| 3) Damage resistance of stack of coating film with epoxy paint-3 | | | | | | | | | | | | | | |
|---|---|---|---|---|---|---|---|---|---|---|---|---|---|---|
| | Examples | | 1 | 2 | 3 | 4 | 5 | 6 | 7 | 8 | 9 | 10 | 11* | 12* |
| | Coating compositions Nos. | | A1 | A2 | A3 | A4 | A5 | A6 | A7 | A8 | A9 | A10 | A11 | A12 |
| Damage resistance test | Drying conditions | 23°C/1 day | 4 | 4 | 4 | 4 | 4 | 4 | 4 | 4 | 4 | 4 | 4 | 4 |
| | | 23°C/2 days | 5 | 5 | 5 | 5 | 5 | 5 | 5 | 5 | 5 | 5 | 5 | 5 |
| | | 23°C/3 days | 5 | 5 | 5 | 5 | 5 | 5 | 5 | 5 | 5 | 5 | 5 | 5 |

⟨Table 4-12: Damage resistance data⟩

| 4) Damage resistance of stack of coating film with epoxy paint-4 | | | | | | | | | | | | | | |
|---|---|---|---|---|---|---|---|---|---|---|---|---|---|---|
| | Examples | | 1 | 2 | 3 | 4 | 5 | 6 | 7 | 8 | 9 | 10 | 11* | 12* |
| | Coating compositions Nos. | | A1 | A2 | A3 | A4 | A5 | A6 | A7 | A8 | A9 | A10 | A11 | A12 |
| Damage resistance test | Drying conditions | 23°C/1 day | 4 | 4 | 4 | 4 | 4 | 4 | 4 | 4 | 4 | 4 | 4 | 4 |
| | | 23°C/2 days | 4 | 4 | 4 | 4 | 4 | 4 | 4 | 4 | 4 | 4 | 4 | 4 |
| | | 23°C/3 days | 5 | 5 | 5 | 5 | 5 | 5 | 5 | 5 | 5 | 5 | 5 | 5 |

⟨Table 4-13: Damage resistance data⟩

| 5) Damage resistance of stack of coating film with epoxy paint-5 | | | | | | | | | | | | | | |
|---|---|---|---|---|---|---|---|---|---|---|---|---|---|---|
| | Examples | | 1 | 2 | 3 | 4 | 5 | 6 | 7 | 8 | 9 | 10 | 11* | 12* |
| | Coating compositions Nos. | | A1 | A2 | A3 | A4 | A5 | A6 | A7 | A8 | A9 | A10 | A11 | A12 |
| Damage resistance test | Drying conditions | 23°C/1 day | 4 | 4 | 4 | 4 | 4 | 4 | 4 | 4 | 4 | 4 | 4 | 4 |
| | | 23°C/2 days | 4 | 4 | 4 | 4 | 4 | 4 | 4 | 4 | 4 | 4 | 4 | 4 |
| | | 23°C/3 days | 5 | 5 | 5 | 5 | 5 | 5 | 5 | 5 | 5 | 5 | 5 | 5 |
| * Reference Example | | | | | | | | | | | | | | |

⟨Table 4-14: Damage resistance data⟩

| 6) Damage resistance of stack of coating film with epoxy paint-6 | | | | | | | | | | | | | | |
|---|---|---|---|---|---|---|---|---|---|---|---|---|---|---|
| | Examples | | 1 | 2 | 3 | 4 | 5 | 6 | 7 | 8 | 9 | 10 | 11* | 12* |
| | Coating compositions Nos. | | A1 | A2 | A3 | A4 | A5 | A6 | A7 | A8 | A9 | A10 | A11 | A12 |
| Damage resistance test | Drying conditions | 23°C/1 day | 4 | 4 | 4 | 4 | 4 | 4 | 4 | 4 | 4 | 4 | 4 | 4 |
| | | 23°C/2 days | 4 | 4 | 4 | 4 | 4 | 4 | 4 | 4 | 4 | 4 | 4 | 4 |
| | | 23°C/3 days | 5 | 5 | 5 | 5 | 5 | 5 | 5 | 5 | 5 | 5 | 5 | 5 |

⟨Table 4-15: Damage resistance data⟩

| 7) Damage resistance of stack of coating film with epoxy paint-7 | | | | | | | | | | | | | | | |
|---|---|---|---|---|---|---|---|---|---|---|---|---|---|---|---|
| Examples | | | 1 | 2 | 3 | 4 | 5 | 6 | 7 | 8 | 9 | 10 | 11* | 12* |
| Coating compositions Nos. | | | A1 | A2 | A3 | A4 | A5 | A6 | A7 | A8 | A9 | A10 | A11 | A12 |
| Damage resistance test | Drying conditions | 23°C/1 day | 4 | 4 | 4 | 4 | 4 | 4 | 4 | 4 | 4 | 4 | 4 | 4 |
| | | 23°C/2 days | 4 | 4 | 4 | 4 | 4 | 4 | 4 | 4 | 4 | 4 | 4 | 4 |
| | | 23°C/3 days | 5 | 5 | 5 | 5 | 5 | 5 | 5 | 5 | 5 | 5 | 5 | 5 |
| * Reference Example | | | | | | | | | | | | | | | |

⟨Table 5-1: Adhesion data⟩

| 1) Adhesion with respect to epoxy paint-1 coating film | | | | | | | |
|---|---|---|---|---|---|---|---|
| Comparative Examples | | | 1 | 2 | 3 | 4 | 5 |
| Coating compositions Nos. | | | B1 | B2 | B3 | B4 | B5 |
| Immersion periods | Intervals between coating applications | | | | | | |
| Test of accelerated deterioration of adhesion after outdoor exposure | 1 Month | 1 Day | 0 | 0 | 0 | 0 | 0 |
| | | 3 Days | 0 | 0 | 1 | 0 | 0 |
| | | 5 Days | 0 | 0 | 1 | 1 | 0 |
| | 3 Months | 1 Day | 0 | 0 | 0 | 0 | 0 |
| | | 3 Days | 1 | 0 | 1 | 0 | 1 |
| | | 5 Days | 2 | 1 | 1 | 1 | 1 |
| | 6 Months | 1 Day | 1 | 0 | 1 | 1 | 1 |
| | | 3 Days | 2 | 0 | 1 | 1 | 2 |
| | | 5 Days | 2 | 1 | 1 | 1 | 2 |
| | 9 Months | 1 Day | 2 | 1 | 1 | 1 | 2 |
| | | 3 Days | 2 | 1 | 2 | 1 | 2 |
| | | 5 Days | 3 | 2 | 2 | 2 | 2 |
| | 12 Months | 1 Day | 3 | 1 | 1 | 1 | 3 |
| | | 3 Days | 3 | 2 | 2 | 1 | 3 |
| | | 5 Days | 3 | 2 | 2 | 2 | 3 |

⟨Table 5-2: Adhesion data⟩

| 2) Adhesion with respect to epoxy paint-2 coating film | | | | | | | | |
|---|---|---|---|---|---|---|---|---|
| | | Comparative Examples | 1 | 2 | 3 | 4 | 5 |
| | | Coating compositions Nos. | B1 | B2 | B3 | B4 | B5 |
| | Immersion periods | Intervals between coating applications | | | | | |
| Test of accelerated deterioration of adhesion after outdoor exposure | 1 Month | 1 Day | 0 | 0 | 0 | 0 | 0 |
| | | 3 Days | 0 | 0 | 1 | 0 | 0 |
| | | 5 Days | 0 | 0 | 1 | 1 | 0 |
| | 3 Months | 1 Day | 0 | 0 | 0 | 0 | 0 |
| | | 3 Days | 1 | 0 | 1 | 0 | 1 |
| | | 5 Days | 2 | 1 | 1 | 1 | 1 |
| | 6 Months | 1 Day | 1 | 0 | 1 | 1 | 1 |
| | | 3 Days | 2 | 0 | 1 | 1 | 2 |
| | | 5 Days | 2 | 1 | 1 | 1 | 2 |
| | 9 Months | 1 Day | 2 | 1 | 1 | 1 | 2 |
| | | 3 Days | 2 | 1 | 2 | 1 | 2 |
| | | 5 Days | 3 | 2 | 2 | 2 | 2 |
| | 12 Months | 1 Day | 3 | 1 | 1 | 1 | 3 |
| | | 3 Days | 3 | 2 | 2 | 1 | 3 |
| | | 5 Days | 3 | 2 | 2 | 2 | 3 |

⟨Table 5-3: Adhesion data⟩

| 3) Adhesion with respect to epoxy paint-3 coating film | | | | | | | | |
|---|---|---|---|---|---|---|---|---|
| | | Comparative Examples | 1 | 2 | 3 | 4 | 5 |
| | | Coating compositions Nos. | B1 | B2 | B3 | B4 | B5 |
| | Immersion periods | Intervals between coating applications | | | | | |
| Test of accelerated deterioration of adhesion after outdoor exposure | 1 Month | 1 Day | 0 | 0 | 0 | 0 | 0 |
| | | 3 Days | 0 | 0 | 1 | 0 | 0 |
| | | 5 Days | 0 | 0 | 1 | 1 | 0 |
| | 3 Months | 1 Day | 0 | 0 | 0 | 0 | 0 |
| | | 3 Days | 1 | 0 | 1 | 0 | 1 |
| | | 5 Days | 2 | 1 | 1 | 1 | 1 |
| | 6 Months | 1 Day | 1 | 0 | 1 | 1 | 1 |
| | | 3 Days | 2 | 0 | 1 | 1 | 2 |
| | | 5 Days | 2 | 1 | 1 | 1 | 2 |
| | 9 Months | 1 Day | 2 | 1 | 1 | 1 | 2 |
| | | 3 Days | 2 | 1 | 2 | 1 | 2 |
| | | 5 Days | 3 | 2 | 2 | 2 | 2 |
| | 12 Months | 1 Day | 3 | 1 | 1 | 1 | 3 |
| | | 3 Days | 3 | 2 | 2 | 1 | 3 |
| | | 5 Days | 3 | 2 | 2 | 2 | 3 |

⟨Table 5-4: Adhesion data⟩

| 4) Adhesion with respect to epoxy paint-4 coating film | | | | | | | |
|---|---|---|---|---|---|---|---|
| | Comparative Examples | | 1 | 2 | 3 | 4 | ' 5 |
| | Coating compositions Nos. | | B1 | B2 | B3 | B4 | B5 |
| | Immersion periods | Intervals between coating applications | | | | | |
| Test of accelerated deterioration of adhesion after outdoor exposure | 1 Month | 1 Day | 0 | 0 | 0 | 0 | 0 |
| | | 3 Days | 0 | 0 | 1 | 0 | 0 |
| | | 5 Days | 0 | 0 | 1 | 1 | 0 |
| | 3 Months | 1 Day | 0 | 0 | 0 | 0 | 0 |
| | | 3 Days | 1 | 0 | 1 | 0 | 1 |
| | | 5 Days | 2 | 1 | 1 | 1 | 1 |
| | 6 Months | 1 Day | 1 | 0 | 1 | 1 | 1 |
| | | 3 Days | 2 | 0 | 1 | 1 | 2 |
| | | 5 Days | 2 | 2 | 1 | 1 | 2 |
| | 9 Months | 1 Day | 2 | 1 | 1 | 1 | 2 |
| | | 3 Days | 2 | 1 | 2 | 1 | 2 |
| | | 5 Days | 3 | 2 | 2 | 2 | 2 |
| | 12 Months | 1 Day | 3 | 1 | 1 | 1 | 3 |
| | | 3 Days | 3 | 2 | 2 | 1 | 3 |
| | | 5 Days | 3 | 2 | 2 | 2 | 3 |

⟨Table 5-5: Adhesion data⟩

| 5) Adhesion with respect to epoxy paint-5 coating film | | | | | | | |
|---|---|---|---|---|---|---|---|
| | Comparative Examples | | 1 | 2 | 3 | 4 | 5 |
| | Coating compositions Nos. | | B1 | B2 | B3 | B4 | B5 |
| | Immersion periods | Intervals between coating applications | | | | | |
| 5) Adhesion with respect to epoxy paint-5 coating film | | | | | | | |
| Test of accelerated deterioration of adhesion after outdoor exposure | 1 Month | 1 Day | 0 | 0 | 0 | 0 | 0 |
| | | 3 Days | 0 | 0 | 1 | 0 | 0 |
| | | 5 Days | 1 | 0 | 1 | 1 | 0 |
| | 3 Months | 1 Day | 0 | 0 | 0 | 0 | 0 |
| | | 3 Days | 1 | 0 | 1 | 0 | 1 |
| | | 5 Days | 2 | 1 | 1 | 1 | 1 |
| | 6 Months | 1 Day | 1 | 0 | 1 | 1 | 1 |
| | | 3 Days | 2 | 1 | 1 | 1 | 2 |
| | | 5 Days | 2 | 2 | 2 | 1 | 2 |
| | 9 Months | 1 Day | 2 | 1 | 1 | 1 | 2 |
| | | 3 Days | 2 | 2 | 2 | 1 | 2 |
| | | 5 Days | 3 | 2 | 2 | 2 | 2 |
| | 12 Months | 1 Day | 3 | 1 | 1 | 1 | 3 |
| | | 3 Days | 3 | 2 | 2 | 1 | 3 |
| | | 5 Days | 3 | 2 | 3 | 3 | 3 |

⟨Table 5-6: Adhesion data⟩

| 6) Adhesion with respect to epoxy paint-6 coating film | | | | | | | |
|---|---|---|---|---|---|---|---|
| | Comparative Examples | | 1 | 2 | 3 | 4 | 5 |
| | Coating compositions Nos. | | B1 | B2 | B3 | B4 | B5 |
| | Immersion periods | Intervals between coating applications | | | | | |
| Test of accelerated deterioration of adhesion after outdoor exposure | 1 Month | 1 Day | 0 | 0 | 0 | 0 | 0 |
| | | 3 Days | 0 | 0 | 1 | 0 | 0 |
| | | 5 Days | 1 | 0 | 1 | 1 | 0 |
| | 3 Months | 1 Day | 0 | 0 | 0 | 0 | 0 |
| | | 3 Days | 1 | 0 | 1 | 1 | 1 |
| | | 5 Days | 2 | 1 | 1 | 1 | 1 |
| | 6 Months | 1 Day | 1 | 0 | 1 | 1 | 1 |
| | | 3 Days | 2 | 1 | 1 | 1 | 2 |
| | | 5 Days | 2 | 2 | 2 | 1 | 2 |
| | 9 Months | 1 Day | 2 | 1 | 1 | 1 | 2 |
| | | 3 Days | 2 | 2 | 2 | 1 | 2 |
| | | 5 Days | 3 | 2 | 2 | 2 | 2 |
| | 12 Months | 1 Day | 3 | 1 | 1 | 1 | 3 |
| | | 3 Days | 3 | 2 | 2 | 1 | 3 |
| | | 5 Days | 3 | 3 | 3 | 3 | 3 |

⟨Table 5-7: Adhesion data⟩

| 7) Adhesion with respect to epoxy paint-7 coating film | | | | | | | |
|---|---|---|---|---|---|---|---|
| | Comparative Examples | | 1 | 2 | 3 | 4 | 5 |
| | Coating compositions Nos. | | B1 | B2 | B3 | B4 | B5 |
| | Immersion periods | Intervals between coating applications | | | | | |
| Test of accelerated deterioration of adhesion after outdoor exposure | 1 Month | 1 Day | 0 | 0 | 0 | 0 | 0 |
| | | 3 Days | 0 | 0 | 1 | 0 | 0 |
| | | 5 Days | 1 | 0 | 1 | 1 | 0 |
| | 3 Months | 1 Day | 0 | 0 | 0 | 0 | 0 |
| | | 3 Days | 1 | 0 | 1 | 0 | 1 |
| | | 5 Days | 2 | 1 | 1 | 1 | 1 |
| | 6 Months | 1 Day | 1 | 0 | 1 | 1 | 1 |
| | | 3 Days | 2 | 1 | 1 | 1 | 2 |
| | | 5 Days | 3 | 2 | 3 | 2 | 3 |
| | 9 Months | 1 Day | 2 | 1 | 1 | 1 | 2 |
| | | 3 Days | 2 | 2 | 2 | 2 | 2 |
| | | 5 Days | 3 | 3 | 3 | 2 | 3 |
| | 12 Months | 1 Day | 3 | 1 | 1 | 1 | 3 |
| | | 3 Days | 3 | 2 | 2 | 2 | 3 |
| | | 5 Days | 3 | 3 | 3 | 3 | 3 |

⟨Table 5-8: Static antifouling data⟩

| | Comparative Examples | | 1 | 2 | 3 | 4 | 5 |
|---|---|---|---|---|---|---|---|
| Static antifouling test | Immersion periods | 1 Month | 0 | 0.5 | 0 | 0 | 0 |
| | | 3 Months | 0 | 1 | 0 | 0 | 0 |
| | | 6 Months | 0 | 1 | 0 | 0 | 0 |
| | | 9 Months | 0 | 2 | 0 | 0 | 0 |
| | | 12 Months | 0 | 3 | 0 | 0 | 0 |
| | | 15 Months | 0 | 3 | 0 | 0 | 0 |

⟨Table 5-9: Damage resistance data⟩

| 1) Damage resistance of stack of coating film with vinyl-based paint-1 | | | | | | | | | | | | | | |
|---|---|---|---|---|---|---|---|---|---|---|---|---|---|---|
| Damage resistance test | Comparative Examples | | 6 | 7 | 8 | 9 | 10 | 11 | 12 | 13 | 14 | 15 | 16 | 17 |
| | Coating compositions Nos. | | A1 | A2 | A3 | A4 | A5 | A6 | A7 | A8 | A9 | A10 | A11 | A12 |
| | Drying conditions | 23°C/1 day | 2 | 2 | 2 | 2 | 2 | 2 | 2 | 1 | 2 | 2 | 2 | 2 |
| | | 23°C/2 days | 2 | 2 | 2 | 2 | 2 | 2 | 2 | 2 | 2 | 2 | 2 | 2 |
| | | 23°C/3 days | 3 | 3 | 3 | 3 | 3 | 3 | 3 | 3 | 3 | 3 | 3 | 3 |

⟨Table 6⟩

| Names | Manufacturers | Properties | Solid content (mass%) |
|---|---|---|---|
| LoLo Tint 97 | AMERICAN CHEMET Co. | Cuprous oxide | 100 |
| Purple Copp | AMERICAN CHEMET Co. | Cuprous oxide | 100 |
| NC-803 | NISSIN CHEMCO LTD. | Cuprous oxide | 100 |
| NC-301 | NISSIN CHEMCO LTD. | Cuprous oxide | 100 |
| Talc FC-1 | Fukuoka Talc Co., LTD. | Extender pigment | 100 |
| Zinc flower No. 3 (zinc oxide) | Kyushu Hakusui Kagaku K.K. | Extender pigment | 100 |
| Novoperm Red FSRK | Clariant North America | Organic red pigment | 100 |
| Copper Omadine (copper pyrithione) | Arch Chemical, Inc. | Organic antifouling agent | 100 |
| Rosin | China | Elution accelerator | 100 |
| Ethyl Silicate 28 | COLCOAT CO., LTD. | Dehydrating agent | 97 |
| DISPARLON A630-20X | Kusumoto Chemicals, Ltd. | Anti-sagging agent | 20 |
| DISPARLON 4200-20 | Kusumoto Chemicals, Ltd. | Anti-settling agent | 20 |
| Titanium white R-5N | SAKAI CHEMICAL INDUSTRY CO., LTD. | Color pigment | 100 |
| Versatic acid | Resolution Netherlands | Elution accelerator | 100 |

⟨Evaluation of characteristics of (co)polymer solutions and (co)polymers⟩

(1) Content of thermal residues in hydrolyzable copolymer solution

The (co) polymer solution weighing 1.5 g (X1 (g)) was held in a thermostatic chamber at 1 atm and 108°C for 3 hours to remove volatile components, and thereby thermal residues (nonvolatile components) were obtained. Next, the mass (X2 (g)) of the thermal residues (nonvolatile components) was measured. The content (%) of the thermal residues in the hydrolyzable copolymer solution was calculated using the following equation.

$$\text{Content (\%) of thermal residues} = X2/X1 \times 100$$

(2) Average molecular weight of hydrolyzable copolymer

The weight average molecular weight (Mw) of the hydrolyzable copolymers was measured by GPC (gel permeation chromatography) under the following conditions.

(GPC conditions)

Chromatograph: "HLC-8120GPC" (manufactured by TOSOH CORPORATION)
Columns: "SuperH2000 + H4000" (manufactured by TOSOH CORPORATION, 6 mm (inner diameter), each 15 cm (length))
Eluent: tetrahydrofuran (THF)
Flow rate: 0.500 ml/min
Detector: RI
Column oven temperature: 40°C
Standard substance: polystyrene
Sample preparation: The hydrolyzable copolymer solutions prepared in Production Examples were each dehydrated by the addition of a small amount of calcium chloride and filtered through a membrane filter. The residues thus obtained were used as GPC measurement samples.

(3) Viscosity of hydrolyzable copolymer solution

The viscosity (unit: mPa·s) of the hydrolyzable copolymer solutions was measured at a liquid temperature of 25°C using a cone-plate viscometer (manufactured by TOKI SANGYO CO. , LTD.)

⟨Fabrication and evaluation of antifouling composite coating films⟩

(1) Accelerated deterioration test of coating film (evaluation of adhesion)

Epoxy paints 1 to 7 (described in Table 7, details of the raw materials used are described in Table 8) were each applied onto a sandblasted plate (150 mm × 70 mm × 1.6 mm) so that the dry thickness would be 150 μm and cured to form a coating film (150 μm) . Immediately thereafter, the coated plates were exposed to the outdoor environment with a southern exposure at an angle of 45° to the ground (that is, the test plates were set so that the coated surface was tilted at 45° relative to the ground and was directed to the south).
Next, with use of an applicator, the antifouling coating compositions of Examples and Comparative Examples were each applied onto the test plates (to the surface of the cured coating film of the epoxy paint) exposed outdoors under the above conditions for 1, 3 and 5 days so that the dry thickness of the coating film would be 100 μm. The wet films were dried at 23°C for 7 days to form antifouling coating films. Test plates with an antifouling composite coating film were thus fabricated.

⟨Table 7⟩

|  |  | Epoxy paints | | | | | | |
|---|---|---|---|---|---|---|---|---|
|  |  | 1 | 2 | 3 | 4 | 5 | 6 | 7 |
| Base component | jER 834-90X | 18.9 |  |  | 18.9 | 17 |  |  |
|  | jER 1001-75X |  | 31 | 31 |  | 7 | 11 | 11 |
|  | jER 828 |  |  |  |  |  | 13 | 13 |
|  | LAROFLEX MP-25 | 3 | 3 |  | 2 | 3 | 3 | 3 |
|  | EVAFLEX EV40W |  |  | 3 |  |  |  |  |
|  | TCP | 3 |  |  |  | 3 | 3 | 3 |
|  | DIANAL BR-106 |  |  |  | 1 |  |  |  |

(continued)

|  |  | Epoxy paints | | | | | | |
|---|---|---|---|---|---|---|---|---|
|  |  | 1 | 2 | 3 | 4 | 5 | 6 | 7 |
|  | Hirenol PL-1000S |  |  |  | 3 |  |  |  |
|  | Talc NKK | 30 | 30 | 30 | 30 |  |  |  |
|  | Gekko BB | 2 | 2 | 2 | 2 | 2 | 2 | 2 |
|  | Alpaste 1900XS | 7 |  |  |  |  |  |  |
|  | Mica Powder 100 Mesh |  | 7 | 7 | 7 |  |  |  |
|  | DISPARLON 6650 | 1.5 | 1.5 | 1.5 | 1.5 | 1 | 0.5 | 0.5 |
|  | Barico 300W |  |  |  |  | 10 | 15 | is |
|  | Unisper PG-K10 |  |  |  |  | 31.5 | 30 | 30 |
|  | Xylene | 15.6 | 11.5 | 11.5 | 15.6 | 8 | 4 | 4 |
|  | MIBK (methyl isobutyl ketone) | 2 | 2 | 2 | 2 | 2 | 3 | 3 |
|  | Methoxypropanol | 2 | 2 | 2 | 2 | 2 | 2 | 2 |
|  | KBM 403 |  |  |  |  | 0.5 | 0.5 | 0.5 |
|  | Subtotal | 85 | 90 | 90 | 85 | 87 | 87 | 87 |
| Curing agent | LUCKAMIDE TD-966 | 10.5 | 7.7 | 7.7 | 2.1 | 10 | 10 | 9 |
|  | ANCAMINE 2074 |  |  |  | 2.1 |  |  |  |
|  | Cardolite CM-5055 |  |  |  |  |  |  | 1 |
|  | TAP | 0.3 | 0.3 | 0.3 | 0.3 | 0.3 | 0.3 | 0.3 |
|  | Xylene | 4.2 | 2 | 2 | 10.5 | 2.7 | 2.7 | 2.7 |
|  | Subtotal | 15 | 10 | 10 | 15 | 13 | 13 | 13 |
| Total |  | 100 | 100 | 100 | 100 | 100 | 100 | 100 |
| Nonvolatile content of paint (mass%) |  | 68 | 72 | 72 | 67 | 78 | 82 | 82 |
| Paint mixing mass ratio Base component:Curing agent |  | 85:15 | 90 : 10 | 90:10 | 85:15 | 87:13 | 87:13 | 87:13 |

⟨Table 8⟩

| Names | Manufacturers | Properties | Solid content (mass%) |
|---|---|---|---|
| jER 834-90X | Mitsubishi Chemical Corporation | Bisphenol A-type epoxy resin | 90 |
| jER 1001-75X | Mitsubishi Chemical Corporation | Bisphenol A-type epoxy resin | 75 |
| jER 828 | Mitsubishi Chemical Corporation | Bisphenol A-type epoxy resin | 100 |
| LAROFLEX MP-25 | BASF | Vinyl chloride/vinyl isobutyl ether copolymer | 100 |
| EVAFLEX EV40W | DUPONT-MITSUI POLYCHEMICALS CO., LTD. | Ethylene/vinyl acetate copolymer | 100 |
| TCP | KYOWA HAKKO KOGYO CO., LTD. | Tricresyl phosphate | 100 |
| DIANAL BR-106 | Mitsubishi Rayon Co., Ltd. | Acrylic resin | 100 |
| Hirenol PL-1000S | Kolon Industries, Inc. | Petroleum resin | 100 |

(continued)

| Names | Manufacturers | Properties | Solid content (mass%) |
|---|---|---|---|
| Talc NKK | FUJI TALC INDUSTRIAL CO., LTD. | Extender pigment: talc | 100 |
| Barico 300W | Hakusui Tech Co., Ltd. | Extender pigment: barium sulfate | 100 |
| Unisper PG-K10 | Sibelco Malaysia | Extender pigment: potassium feldspar | 100 |
| Gekko BB | TODA KOGYO CORP. | Color pigment: red iron oxide | 100 |
| Alpaste 1900XS | TOYO ALUMINIUM K.K. | Anticorrosive pigment | 75 |
| Mica Powder 100 Mesh | Fukuoka Talc Co., LTD. | Anticorrosive pigment | 100 |
| DISPARLON 6650 | Kusumoto Chemicals, Ltd. | Thixotropic agent | 100 |
| KBM 403 | Shin-Etsu Chemical Co., Ltd. | Coupling agent | 100 |
| LUCKAMIDE TD-966 | DIC | Curing agent: polyamidoamine | 60 |
| ANCAMINE 2074 | Air Products and Chemicals, Inc. | Curing agent: modified alicyclic polyamine | 100 |
| Cardolite CM-5055 | Cardolite Corporation | Curing agent: phenalkamine | 70 |
| TAP | Kayaku Akzo Corporation | Curing accelerator | 100 |

The test plates with the antifouling composite coating film were immersed in artificial seawater at 40°C, and the adhesion was examined every month after the start of immersion based on the evaluation criteria described below.

[Adhesion evaluation]

With an NT cutter, four lines were cut at spacings of 4 mm in each of the vertical direction and the transverse direction on the antifoul-coated face of the test plate, thereby forming nine squares. Cellotape® was press bonded to the coating film surface that had been thus cut and was peeled rapidly, and the squares were observed. The proportion (%) of the area (delamination area) of the squares in which the coating film had been delaminated between the epoxy coating film (P) and the antifouling coating film (Q) after the peeling operation was calculated relative to the area of the nine squares as 100%. The adhesion was evaluated based on the evaluation criteria below. The results are described in Tables 4-1 to 4-7 and Tables 5-1 to 5-7. Tables 4-1 to 4-7 show the results of the antifouling coating films and the epoxy resin coating films representing Examples, and Tables 5-1 to 5-7 describe the results of the antifouling coating films and the epoxy resin coating films representing Comparative Examples.

[Adhesion evaluation criteria]

0: The delamination area of the coating film was less than 5%.
1: The delamination area of the coating film was 5 to less than 25%.
2: The delamination area of the coating film was 25 to less than 50%.
3: The delamination area of the coating film was 50% or more.

(2) Static antifouling test

With use of an applicator, sandblasted plates (300 mm × 100 mm × 3.2 mm) were coated with an epoxy-based paint (an epoxy AC paint, trade name "BANNOH 500" manufactured by CHUGOKU MARINE PAINTS, LTD.) so that the dry thickness would be 150 $\mu$m. The wet film was cured to form a coating film (150 $\mu$m). Next, the epoxy paint 1 (described in Table 7) was applied onto the cured coating film with an applicator so that the dry thickness would be 100 $\mu$m. The wet film was cured to form a coating film (100 $\mu$m). Test plates were thus fabricated.
Next, the antifouling coating compositions of Examples and Comparative Examples were applied onto the test plates (the surface of the cured coating film of the epoxy paint) with use of an applicator so that the dry thickness would be 150 $\mu$m. The wet films were dried at 23°C for 1 day to form antifouling coating films (150 $\mu$m). The coating compositions were further applied onto the surface of the antifouling coating films so that the dry thickness would be 150 $\mu$m, and the wet films were dried at 23°C for 7 days to form antifouling coating films. Test plates with an antifouling composite coating film were thus fabricated.

The test plates with the antifouling composite coating film obtained as described above were immersed offshore Kurahashi-jima island, Hiroshima, Japan, under static conditions. Every month after the start of immersion, the proportion (%) of the area (fouled area) of the antifouling coating film that had been fouled by aquatic organisms was measured relative to the area of the entirety of the antifouling coating film of the test plate as 100%. The static antifouling properties were evaluated based on the evaluation criteria below. The results are described in Table 4-8 and Table 5-8. Table 4-8 shows the results of the antifouling coating films and the epoxy resin coating films representing Examples, and Table 5-8 describes the results of the antifouling coating films and the epoxy resin coating films representing Comparative Examples.

[Evaluation criteria]

0: The fouled area was 0%.
0.5: The fouled area was above 0 and less than 10%.
1: The fouled area was 10 to less than 20%.
2: The fouled area was 20 to less than 30%.
3: The fouled area was 30 to less than 40%.
4: The fouled area was 40 to less than 50%.
5: The fouled area was 50 to 100%.

(3) Damage resistance of layered coating films

With use of an air sprayer, 70 mm × 150 × 1.6 mm sandblasted steel plates were coated with the epoxy paints 1 to 7 (described in Table 7) so that the dry thickness would be 150 $\mu$m in conformity with ship standard specifications or with a vinyl paint (described in Table 9, details of the raw materials used are described in Table 10) so that the dry thickness would be 50 $\mu$m in conformity with ship standard specifications.

⟨Table 9⟩

|  | Vinyl paint |
| --- | --- |
| Xylene | 25 |
| MIBK | 25 |
| PLENLIZER ST-210 | 0.5 |
| Solbin AL | 21 |
| Talc NKK | 17 |
| Gekko BB | 2 |
| TCP | 1 |
| Alpaste 1900XS | 7 |
| DISPARLON 6650 | 1.5 |
| (Subtotal) | 100 |

⟨Table 10⟩

| Names | Manufacturers | Properties | Solid content (mass%) |
| --- | --- | --- | --- |
| PLENLIZER ST-210 | Ajinomoto Fine-Techno Co., Inc. | Dipentaerythritol adipic acid ester (vinyl chloride stabilizer) | 100 |

(continued)

| Names | Manufacturers | Properties | Solid content (mass%) |
|---|---|---|---|
| Solbin AL | Nissin Chemical Co., Ltd. | Vinyl chloride/vinyl acetate copolymer | 100 |
| TCP | KYOWA HAKKO KOGYO CO., LTD. | Tricresyl phosphate | 100 |
| Talc NKK | FUJI TALC INDUSTRIAL CO., LTD. | Extender pigment: talc | 100 |
| Gekko BB | TODA KOGYO CORP. | Color pigment: red iron oxide | 100 |
| Alpaste 1900XS | TOYO ALUMINIUM K.K. | Anticorrosive pigment | 75 |
| DISPARLON 6650 | Kusumoto Chemicals, Ltd. | Thixotropic agent | 100 |

After an interval of 1 day from the coating application, the antifouling coating compositions (compositions Nos. A1 to A12) were applied with use of an air sprayer so that the dry thickness would be 150 μm, and were dried at 23°C for 1 day, 2 days or 3 days, thus forming antifouling coating films. A 30 mm × 30 mm × 10 mm wood piece was placed on a central portion of the coating film, and a pressure of 40 kgf/cm$^2$ (3.9 MPa) was applied onto the wood piece in a vertical direction for 20 minutes. The surface state of the coating film was observed. The results are described in Tables 4-9 to 4-15 and Table 5-9. Fig. 1 illustrates the criteria on which the evaluation (of the degree of deformation of the coating film) was made. Tables 4-9 to 4-15 show the results of the antifouling coating films and the epoxy resin coating films representing Examples, and Table 5-9 describes the results of the antifouling coating films and the vinyl resin coating films representing Comparative Examples.

Evaluation Criterion 5 shows the most preferred state with no deformation of the coating film.

In Evaluation Criterion 4, the state of the coating film is good, although a slight deformation is seen. In Evaluation Criteria 3, 2 and 1, deformation is so significant that the steel plate is partially exposed. The degree of damage (deformation) increases in the order of 3, 2 and 1.

INDUSTRIAL APPLICABILITY

The antifouling composite coating films of the present invention may be applied to, among others, underwater structures such as water supply inlets and drains in various power plants (thermal power plants and nuclear power plants), and sludge diffusion prevention fences used in various offshore or river engineering works for building structures such as coast roads, submarine tunnels, port facilities, and canals or waterways, ships (in particular, vessel portions from the draft line to the bottom), and fishing gears (such as ropes, floats and buoys).

**Claims**

1. An antifouling composite coating film comprising a stack comprising an antifouling coating film (Q) formed from a hydrolyzable antifouling coating composition (q) on an epoxy resin-based coating film (P) formed from an epoxy resin-based coating composition (p),

   wherein the epoxy resin-based coating composition (p) comprises 100 parts by mass of a bisphenol-type epoxy resin (p-1), 5 to 40 parts by mass of a vinyl-based copolymer (p-2), and 10 to 80 parts by mass of an amine-based curing agent (p-3),
   wherein the hydrolyzable antifouling coating composition (q) comprises (A) a hydrolyzable copolymer including a structural unit (1) derived from triisopropylsilyl methacrylate (i), a structural unit (2) derived from 2-methoxyethyl (meth)acrylate (ii), and a structural unit (3) derived from a polymerizable monomer (iii) having a polymerizable double bond with the proviso that triisopropylsilyl methacrylate and 2-methoxyethyl (meth)acrylate are excluded, and (B) a rosin and/or a monocarboxylic acid compound,
   wherein the 2-methoxyethyl (meth)acrylate (ii) comprises 2-methoxyethyl methacrylate,
   wherein the ratio of the mass of the structural units (2) to the total mass of the structural units (1), (2) and (3) is 10/100 to 30/100,
   wherein the rosin is a rosin or a rosin derivative, the rosin being selected from gum rosin, wood rosin, and tall oil rosin, and the rosin derivative being selected from hydrogenated rosin and disproportionated rosin, and

wherein the monocarboxylic acid compound is selected from trimethylisobutenylcyclohexenecarboxylic acid, naphthenic acid, versatic acid, stearic acid, salicylic acid, and salts of these acids.

2. The antifouling composite coating film according to Claim 1, wherein the ratio (WA/WB) of the content (WA) of the hydrolyzable copolymer (A) to the content (WB) of the rosin and/or the monocarboxylic acid compound (B) is 99.9/0.1 to 30/70 by mass.

3. The antifouling composite coating film according to Claim 1 or 2, wherein the hydrolyzable antifouling coating composition (q) further comprises at least one selected from the group consisting of cuprous oxide (C), an inorganic copper compound (D) except the cuprous oxide (C), an organic antifouling agent (E), a color pigment (F), an extender pigment (G), a pigment dispersant (H), a plasticizer (I), an anti-sagging agent (J), an anti-settling agent (K), a dehydrating agent (L) and a solvent (M).

4. An antifouling substrate comprising a substrate and the antifouling composite coating film described in any one of Claims 1 to 3, the substrate and the antifouling composite coating film being stacked in the order of substrate/epoxy resin-based coating film (P)/antifouling coating film (Q).

5. The antifouling substrate according to Claim 4, which is placed in contact with seawater or freshwater.

6. The antifouling substrate according to Claim 4 or 5, wherein the antifouling substrate is at least one selected from the group consisting of underwater structures, ships and fishing gears.

7. A method for producing an antifouling substrate described in any one of Claims 4 to 6, comprising stacking the substrate, the epoxy resin-based coating film (P) and the antifouling coating film (Q) in the order of substrate/epoxy resin-based coating film (P)/antifouling coating film (Q).

**Patentansprüche**

1. Zusammengesetzter Antifoulingbeschichtungsfilm, umfassend einen Antifoulingbeschichtungsfilm (Q), der aus einer hydrolysierbaren Antifoulingbeschichtungszusammensetzung (q) gebildet ist, auf einem Epoxidharz-basierten Beschichtungsfilm (P), der aus einer Epoxidharz-basierten Beschichtungszusammensetzung (p) gebildet ist,

wobei die Epoxidharz-basierte Beschichtungszusammensetzung (p) 100 Masseteile eines Epoxidharzes vom Bisphenoltyp (p-1), 5 bis 50 Masseteile eines vinylbasierten Copolymers (p-2) und 10 bis 80 Masseteile eines aminbasierten Härtungsmittels (p-3) umfasst,
wobei die hydrolysierbare Antifoulingbeschichtungszusammensetzung (q) (A) ein hydrolysierbares Copolymer, das eine Struktureinheit (1), die sich von Triisopropylsilylmethacrylat (i) ableitet, eine Struktureinheit (2), die sich von 2-Methoxyethyl(meth)acrylat (ii) ableitet, und eine Struktureinheit (3) einschließt, die sich von einem polymerisierbaren Monomer (iii) ableitet, das eine polymerisierbare Doppelbindung aufweist, mit der Maßgabe, dass Triisopropylsilylmethacrylat und 2-Methoxyethyl(meth)acrylat ausgenommen sind, und (B) ein Kolophonium und/oder einer Monocarbonsäureverbindung umfasst,
wobei das 2-Methoxyethyl(meth)acrylat (ii) 2-Methoxyethylmethacrylat umfasst,
wobei das Verhältnis der Masse der Struktureinheiten (2) zu der Gesamtmasse der Struktureinheiten (1), (2) und (3) 10/100 bis 30/100 beträgt,
wobei das Kolophonium ein Kolophonium oder ein Kolophoniumderivat ist, wobei das Kolophonium aus Balsamkolophonium, Holzkolophonium und Tallölkolophonium ausgewählt ist und das Kolophoniumderivat aus hydriertem Kolophonium und disproportioniertem Kolophonium ausgewählt ist, und
wobei die Monocarbonsäureverbindung aus Trimethylisobutenylcyclohexencarbonsäure, Naphthensäure, Versatic-Säure, Stearinsäure, Salicylsäure und Salzen von diesen Säuren ausgewählt ist.

2. Zusammengesetzter Antifoulingbeschichtungsfilm gemäß Anspruch 1, wobei das Verhältnis (WA/WB) des Gehalts (WA) des hydrolysierbaren Copolymers (A) zu dem Gehalt (WB) des Kolophoniums und/oder der Monocarbonsäureverbindung (B) 99,9/0,1 bis 30/70, bezogen auf die Masse, beträgt.

3. Zusammengesetzter Antifoulingbeschichtungsfilm gemäß Anspruch 1 oder 2, wobei die hydrolysierbare Antifoulingbeschichtungszusammensetzung (q) ferner mindestens eines, ausgewählt aus der Gruppe, bestehend aus Kupfer(I)oxid (C), einer anorganischen Kupferverbindung (D) mit Ausnahme des Kupfer(I)oxids (C), einem organischen Antifoulingmittel (E), einem Farbpigment (F), einem Extenderpigment (G), einem Pigmentdispergiermittel (H), einem Weichmacher (I), einem Anti-Ablaufmittel (J), einem Anti-Absetzmittel (K), einem Dehydratisierungsmittel (L) und einem Lösungsmittel (M), umfasst.

4. Antifoulingsubstrat, umfassend ein Substrat und den in einem der Ansprüche 1 bis 3 beschriebenen zusammengesetzten zusammengesetzten Antifoulingbeschichtungsfilm, wobei das Substrat und der zusammengesetzte Antifoulingbeschichtungsfilm in der Reihenfolge Substrat/Epoxidharz-basierter Beschichtungsfilm (P)/Antifoulingbeschichtungsfilm (Q) gestapelt sind.

5. Antifoulingsubstrat gemäß Anspruch 4, das mit Meerwasser oder Süßwasser in Kontakt gebracht wird.

6. Antifoulingsubstrat gemäß Anspruch 4 oder 5, wobei das Antifoulingsubstrat mindestens eines, ausgewählt aus der Gruppe, bestehend aus Unterwasserstrukturen, Schiffen und Fischereiausrüstung, ist.

7. Verfahren zur Herstellung eines in einem der Ansprüche 4 bis 6 beschriebenen Antifoulingsubstrats, umfassend, das Stapeln des Substrats, des Epoxidharz-basierten Beschichtungsfilms (P) und des Antifoulingbeschichtungsfilms (Q) in der Reihenfolge Substrat/Epoxidharz-basierter Beschichtungsfilm (P)/Antifoulingbeschichtungsfilm (Q).

**Revendications**

1. Film de revêtement composite antisalissure comprenant un empilement constitué d'un film (Q) de revêtement antisalissure formé à partir d'une composition (q) de revêtement antisalissure hydrolysable sur un film (P) de revêtement à base de résine époxy formé à partir d'une composition (p) de revêtement à base de résine époxy,

   dans lequel la composition (p) de revêtement à base de résine époxy comprend 100 parties en masse d'une résine époxy (p-1) de type bisphénol, de 5 à 40 parties en masse d'un copolymère (p-2) à base de vinyle et de 10 à 80 parties en masse d'un agent (p-3) de durcissement à base d'amine,
   dans lequel la composition (q) de revêtement antisalissure hydrolysable comprend (A) un copolymère hydrolysable comprenant un motif de structure (1) dérivé du méthacrylate de triisopropylsilyle (i), un motif de structure (2) dérivé du (méth)acrylate de 2-méthoxyéthyle (ii), et un motif de structure (3) dérivé d'un monomère polymérisable (iii) présentant une double liaison polymérisable, à condition que le méthacrylate de triisopropylsilyle et le (méth)acrylate de 2-méthoxyéthyle soient exclus, et (B) une colophane et/ou un composé d'acide monocarboxylique,
   dans lequel le (méth)acrylate de 2-méthoxyéthyle (ii) comprend le méthacrylate de 2-méthoxyéthyle,
   dans lequel le rapport entre la masse des motifs de structure (2) et la masse totale des motifs de structure (1), (2) et (3) est compris entre 10/100 et 30/100,
   la colophane étant une colophane ou un dérivé de colophane, la colophane étant choisie parmi la colophane de gomme, la colophane de bois et la colophane de tall oil, et le dérivé de colophane étant choisi parmi la colophane hydrogénée et la colophane disproportionnée, et
   dans lequel le composé d'acide monocarboxylique est choisi parmi l'acide triméthylisobuténylcyclohexènecarboxylique, l'acide naphténique, l'acide versatique, l'acide stéarique, l'acide salicylique et les sels de ces acides.

2. Film de revêtement composite antisalissure selon la revendication 1, dans lequel le rapport (WA/WB) entre la teneur (WA) en copolymère hydrolysable (A) et la teneur (WB) en colophane et/ou en composé d'acide monocarboxylique (B) est de 99,9/0,1 à 30/70 en masse.

3. Film de revêtement composite antisalissure selon la revendication 1 ou la revendication 2, dans lequel la composition (q) de revêtement antisalissure hydrolysable comprend en outre au moins un, sélectionné, faisant partie du groupe consistant en l'oxyde cuivreux (C), un composé inorganique du cuivre (D) à l'exception de l'oxyde cuivreux (C), un agent organique antisalissure (E), un pigment de couleur (F), un pigment de charge (G), un dispersant de pigment (H), un plastifiant (I), un agent anti-coulure (J), un agent anti-sédimentation (K), un agent déshydratant (L) et un solvant (M).

4. Substrat antisalissure comprenant un substrat et le film de revêtement composite antisalissure selon l'une quelconque des revendications 1 à 3, le substrat et le film de revêtement composite antisalissure étant empilés dans l'ordre substrat/film (P) de revêtement à base de résine époxy/film (Q) de revêtement antisalissure.

5. Substrat antisalissure selon la revendication 4, qui est mis en contact avec de l'eau de mer ou de l'eau douce.

6. Substrat antisalissure selon la revendication 4 ou la revendication 5, dans lequel le substrat antisalissure est au moins un, sélectionné, faisant partie du groupe consistant en les structures sous-marines, les navires et les engins de pêche.

7. Procédé de production d'un substrat antisalissure selon l'une quelconque des revendications 4 à 6, comprenant l'empilement du substrat, du film (P) de revêtement à base de résine époxy et du film (Q) de revêtement antisalissure dans l'ordre substrat/film (P) de revêtement à base de résine époxy /film (Q) de revêtement antisalissure.

FIGURE 1

EVALUATION

GOOD
(MINOR DAMAGE)

POOR
(SERIOUS DAMAGE)

**EP 3 385 072 B2**

**REFERENCES CITED IN THE DESCRIPTION**

**Patent documents cited in the description**

- WO 2014175140 A1
- JP H11333374 A
- JP 2011026357 A
- JP 2010144106 A
- WO 2013073580 A
- WO 2009031509 A
- JP 2001151830 A